# EUROPÄISCHE PATENTSCHRIFT

(11) **EP 0 793 581 B1**
(45) Veröffentlichungstag und Bekanntmachung des Hinweises auf die Patenterteilung: **31.10.2001**
(21) Anmeldenummer: 96923812.0
(22) Anmeldetag: 03.07.1996
(51) Int. Cl.: B60K 26/02, G05G 1/14, F02D 11/10

(54) **FAHRPEDALMODUL**
ACCELERATOR PEDAL MODULE
MODULE PEDALE D'ACCELERATEUR

(30) Priorität: 30.09.1995 DE 19536606
(43) Veröffentlichungstag der Anmeldung: 10.09.1997
(73) Patentinhaber: ROBERT BOSCH GMBH, 70442 Stuttgart (DE)
(72) Erfinder: ASCHOFF, Jörg, D-77815 Bühl (DE); FLEIG, Harry, D-77767 Appenweier (DE); PFETZER, Emil, D-77815 Bühl (DE); VELTE, Uwe, D-77833 Ottersweier (DE); MÄNNLE, Erik, D-77704 Oberkirch (DE)
(86) Internationale Anmeldenummer: DE9601201
(87) Internationale Veröffentlichungsnummer: WO9712781

(56) Entgegenhaltungen:
- EP-A- 0 195 579
- EP-A- 0 393 974
- EP-A- 0 655 671
- DE-C- 4 407 005
- US-A- 5 309 361

## Beschreibung

### Stand der Technik

Die Erfindung geht aus von einem Fahrpedalmodul zum Steuern der Leistung einer Antriebsmaschine nach der Gattung des Hauptanspruchs.

Zum Steuern der Leistung einer Antriebsmaschine eines Kraftfahrzeugs muß der Wunsch des Kraftfahrzeugführers von einem im Bereich des Kraftfahrzeugführers angeordneten Pedalhebel an die Antriebsmaschine übermittelt werden. Bei konventionellen Kraftfahrzeugen geschieht die Übermittlung normalerweise mit Hilfe mechanischer Übertragungsmittel. Die mechanischen Übertragungsmittel sind beispielsweise ein Gestänge oder ein Bowdenzug. Zunehmend werden die mechanischen Übertragungsmittel durch elektrische Übertragungsmittel ersetzt. Bei diesen Lösungen gibt es einen Sensor, der die Stellung des Pedalhebels mißt. Meßwerte von diesem Sensor werden zwecks Steuerung der Antriebsmaschine an die Antriebsmaschine übermittelt.

Bisher wird der Sensor zusammen mit der Rückstellfederung in einem gemeinsamen Gehäuse gelagert (z. B. DE 34 11 393 A1; EP-A-00 92 640; WO-A-89/07706; WO-A-91/04165). Zusätzlich sind in dem gemeinsamen Gehäuse häufig noch eine Kick-Down-Mechanik und ein Endschalter sowie verschiedene Reibelemente und die Reibelemente beaufschlagende Federn vorgesehen. Bei diesen Ausführungen sind die Schleifer des Sensors, die Rückstellfedern, die Federn für die Reibelemente und Teile der Kick-Down-Mechanik auf einer gemeinsamen Welle gelagert. Da in dem Gehäuse zusammen mit dem Sensor verschiedene weitere Komponenten angeordnet sind, ist eine Anpassung an fahrzeugspezifische Unterschiede mit hohem Aufwand verbunden. Da es eine Vielzahl unterschiedlicher fahrzeugspezifischer Anforderungen gibt, ergibt sich eine Vielzahl unterschiedlicher Ausführungsvarianten. Bei der bekannten Ausführung ist eine einfache Anpassung an unterschiedliche fahrzeugspezifische Pedalwege nicht ohne Abänderung der gesamten, den Sensor enthaltenden Baueinheit möglich. Ferner, weil das Gehäuse ziemlich groß baut, kann der Sensor normalerweise nicht im Fußbereich des Kraftfahrzeugführers angeordnet werden. Weiters ist ein entsprechendes modul der US-A-5,309,361 zu entnehmen.

### Vorteile der Erfindung

Ein Sensor ist ein komplexes Bauteil, das nur dann kostengünstig herstellbar ist, wenn es möglich ist, den Sensor in einer einheitlichen Bauform in großer Stückzahl herzustellen. Jede Abwandlung erhöht den Fertigungsaufwand beträchtlich. Das vorgeschlagene Fahrpedalmodul kann vorteilhafterweise so hergestellt werden, daß stets ein einheitlich gebauter Sensor an der Haltestruktur befestigt werden kann. Die Anpassung an spezielle Kundenwünsche, die je nach Fahrzeug erheblich schwanken können, kann vorteilhafterweise ohne großen Aufwand durch einfache Abänderung des Pedalhebels bzw. der Haltestruktur erreicht werden.

Durch entsprechende Wahl des Eingriffs zwischen der Sensorhebelanlenkung und der Pedalhebelanlenkung, insbesondere durch entsprechende Wahl des radialen Abstands zwischen der schwenkachse und der Pedalhebelanlenkung, kann die Auflösung des Sensors den Kundenwünschen vorteilhafterweise ohne großen Aufwand leicht und einfach angepaßt werden, ohne daß dazu eine Abänderung des Sensors erforderlich ist. Dies reduziert die Teilevielfalt erheblich.

Das Fahrpedalmodul gestattet vorteilhafterweise eine montagefreundliche und kostengünstig herstellbare, sowie ohne zusätzlichen Aufwand leicht anpaßbare Bauform.

Bereits bei einem einzigen Fahrpedalmodul machen sich die beim Herstellaufwand und Bauvolumen erzielbaren Einsparungen auf vorteilhafte Weise bemerkbar. Unter Berücksichtigung, daß das Fahrpedalmodul in großer Stückzahl benötigt und hergestellt wird, ergeben sich insgesamt sehr große entscheidende Kostenvorteile. Bei dem vorgeschlagenen Fahrpedalmodul ist die Montage wesentlich erleichtert, was insbesondere bei großer Stückzahl besonders deutlich wird. Eine automatische bzw. halbautomatische Fertigung wird wesentlich erleichtert.

Da das Fahrpedalmodul als kompakte Baueinheit gefertigt werden kann, ist der Platzbedarf für das Fahrpedalmodul in einem Kraftfahrzeug vorteilhafterweise besonders gering und die Montage des Fahrpedalmoduls in das Kraftfahrzeug ist besonders einfach.

Bei dem hier vorgeschlagenen Fahrpedalmodul kann der Sensor in einem separaten Gehäuse angeordnet sein, und durch entsprechende Gestaltung des Pedalhebels kann das Fahrpedalmodul vorteilhafterweise ohne Abänderung des Sensors fahrzeugspezifisch angepaßt werden. Dies ermöglicht die Herstellung eines einheitlichen Sensors in großer Stückzahl.

Durch die in den Unteransprüchen aufgeführten Maßnahmen sind vorteilhafte Weiterbildungen und Verbesserungen des Fahrpedalmoduls möglich.

Das um die Sensorhebeldrehachse schwenkbare Sensorgehäuse des Sensors, bietet den Vorteil, daß das Einjustieren des Sensors sehr einfach und schnell vonstatten gehen kann. Der Sensor kann beispielsweise so einjustiert werden, daß bei nichtbetätigtem Pedalhebel das vom Sensor abgegebene elektrische Signal einen ganz bestimmten festgelegten Wert hat.

Durch den Anschlag am Pedalhebel, an dem die Sensorhebelanlenkung zur Anlage kommt bzw. der Anschlag am Sensorhebel, an dem die Pedalhebelanlenkung zur Anlage kommt, ergibt sich eine leicht herstellbare, funktionssichere Verbindung zwischen dem Pedalhebel und dem Sensor.

Die zwischen dem Pedalhebel und dem Sensorhebel wirkende Rückstellsicherung bietet den Vorteil, daß ohne eine Sensorrückstellfeder bzw. bei einem Ausfall einer Sensorrückstellfeder eine Rückstellung des Sensors gewährleistet ist.

Die den Sensorhebel des Sensors rückstellende Sensorrückstellfeder ermöglicht eine spielfreie Anlenkung zwischen dem Sensorhebel und dem Pedalhebel.

Bildet der Sensor eine vormontierbare Baueinheit, dann ergibt sich auf vorteilhafte Weise eine einfache, kostengünstige Herstellung des Sensors und eine vorteilhafte einfache Bevorratung des Sensors. Durch die vormontierbare Baueinheit kann der Sensor vorteilhafterweise in großer Stückzahl gefertigt werden, unabhängig von Unterschieden, die aus fahrzeugspezifischen Gründen beim Pedalhebel berücksichtigt werden müssen.

Durch Lagerung des Pedalhebels über eine Lagerschale mit einem Lagerradius und einem in der Lagerschale gelagerten Lagerzapfen, wobei der Lagerzapfen so groß bemessen ist, daß eine deutlich merkbare, eine Schwenkbewegung des Pedalhebels behindernde Reibhysterese entsteht, bietet den Vorteil, daß eine das Fahrgefühl deutlich verbessernde Reibung entsteht und trotzdem die Anzahl der erforderlichen Bauteile sehr gering ist.

Der die Reibung bestimmende Lagerradius kann den Wünschen der Kunden bzw. fahrzeugspezifischen Erfordernissen auf einfache, vorteilhafte Art und Weise angepaßt werden. Insbesondere muß dabei auch der ein Signal an eine Steuerung liefernde Sensor nicht geändert werden.

Wird die Rückstellfederung so ausgeführt, daß sie in einer die Reibung bestimmenden Weise auf den Pedalhebel wirkt, so hat dies den Vorteil, daß bei einer eventuellen, infolge eines Defekts auftretenden Verminderung der Rückstellkraft der Rückstellfederung die Reibung in gleichem Maße wie die Rückstellkraft abnimmt, so daß auch bei einer reduzierten Rückstellkraft ein Zurückstellen des Pedalhebels gewährleistet bleibt.

Umfaßt die Rückstellfederung mehrere, vorzugsweise zwei Rückstellfedern, so hat dies den Vorteil, daß bei Ausfall einer der Rückstellfedern das Zurückstellen des Pedalhebels gewährleistet bleibt.

Wird die Rückstellfederung in Form einer Blattfeder bzw. mehreren Blattfedern ausgeführt, so ergibt dies vorteilhafterweise eine besonders einfache, platzsparende, leicht herstellbare, kostengünstige Ausführungsform.

Wird die Blattfeder U-förmig gebogen, dann läßt sich die Blattfeder vorteilhafterweise besonders platzsparend einbauen, ohne daß wegen der Blattfeder das Bauvolumen der gesamten Vorrichtung größer wird. Die U-förmige Gestalt entspricht besonders geschickt ungefähr der Winkelstellung, die der Pedalhebel gegenüber der Haltestruktur aufweist.

Durch Integration mindestens eines Teilbereichs der Blattfeder in die Haltestruktur bzw. mindestens eines Teilbereichs der Blattfeder in den Pedalhebel oder durch Integration eines Teils der Blattfeder in den Pedalhebel und eines weiteren Teils in die Haltestruktur wird der insgesamt benötigte Platzbedarf auf ein Minimum reduziert. Durch teilweises hohles Ausbilden der Haltestruktur bzw. des Pedalhebels wird die Festigkeit dieser Teile kaum reduziert, es kann aber wesentlich Material und Gewicht gespart werden, und es ergibt sich ein Raum, der zur Anordnung der Blattfeder hervorragend geeignet ist.

Wird die Rückstellfeder der Rückstellfederung so ausgeführt, daß bei einem eventuellen Bruch der Rückstellfeder zumindest ein Teilstück der Rückstellfeder sichtbar aus ihrer Funktionsstellung herausfällt, so bietet dies den Vorteil, daß bei einer Inspektion des Fahrzeugs bzw. des Fahrpedalmoduls der Fehler auf einfache Weise leicht erkannt werden kann.

Das Anbringen der Kick-Down-Mechanik bzw. eines Schalters oder eines festen Anschlags an der Haltestruktur oder am Pedalhebel vorzugsweise als komplett vormontierte, vorzugsweise leicht anbaubare Baueinheit, bietet den Vorteil, daß den Kundenwünschen entsprechend die erforderliche Kick-Down-Mechanik bzw. der erforderliche Schalter oder feste Anschlag angebaut werden kann, ganz ohne bzw. ohne wesentliche sonstige Änderungen am Fahrpedalmodul.

Der Schnappmechanismus erleichert den Anbau der Kick-Down-Mechanik bzw. des Schalters oder des festen Anschlags auf vorteilhafte Weise wesentlich. Ferner erleichert der Schnappmechanismus eine kurzfristige Anpassung des Fahrpedalmoduls an spezielle Kundenanforderungen vorteilhafterweise deutlich.

### Zeichnung

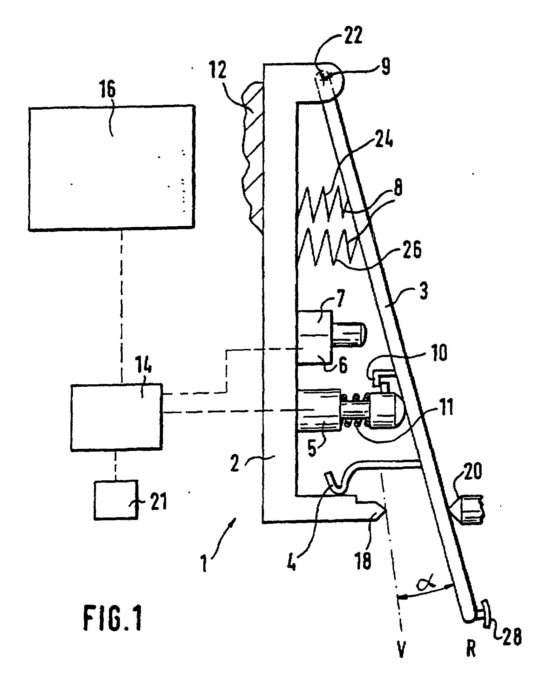

Ausgewählte, besonders vorteilhafte Ausführungsbeispiele der Erfindung sind in der Zeichnung vereinfacht dargestellt und in der nachfolgenden Beschreibung näher erläutert. Es zeigen die Figuren 1 bis 10 unterschiedlich ausgebildete, besonders vorteilhafte, ausgewählte Ausführungsbeispiele in Übersicht bzw. Einzelheiten und unterschiedliche Darstellungen verschiedener Ausführungsbeispiele bzw. Ausschnitte aus einem Ausführungsbeispiel.

### Beschreibung der Ausführungsbeispiele

Das erfindungsgemäß ausgeführte Fahrpedalmodul kann zur Steuerung verschiedener Antriebsmaschinen verwendet werden. Die Antriebsmaschine ist beispielsweise ein Ottomotor, dessen Drosselklappe mit einem Stellmotor verstellt wird. In diesem Fall dient das Fahrpedalmodul zur Erzeugung von elektrischen Signalen, die dem die Drosselklappe verstellenden Stellmotor zugeführt werden. Die Antriebsmaschine kann aber auch beispielsweise ein Dieselmotor oder ein Elektromotor sein, wobei auch in diesen Fällen vom Fahrpedalmodul elektrische Signale ausgehen, die, entsprechend umgeformt, die Leistung der Antriebsmaschine steuern.

Das Fahrpedalmodul ist vorzugsweise direkt im Aktionsbereich des Kraftfahrzeugführers eines Kraftfahrzeugs angeordnet. Der Pedalhebel des Fahrpedalmoduls ist vorzugsweise das unmittelbar vom Fahrerfuß betätigte Gaspedal. Bei besonderem Bedarf ist es aber auch problemlos möglich, mit einfachen mechanischen Mitteln am Pedalhebel des Fahrpedalmoduls ein separates Gaspedal oder einen sonstigen Bedienhebel anzulenken.

Die Figur 1 zeigt in schematisierter Darstellungsweise ein Fahrpedalmodul 1. Das Fahrpedalmodul 1 umfaßt eine Haltestruktur 2, einen Pedalhebel 3, eine Reibeinrichtung 4, einen Sensor 5, einen Schalter 6, eine Kick-Down-Mechanik 7, eine Rückstellfederung 8 und eine Lagerstelle 9.

Die Haltestruktur 2 ist vorzugsweise unmittelbar im Fußbereich eines Kraftfahrzeugführers an einem durch Schraffur in der Figur 1 symbolhaft dargestellten Chassis 12 befestigt. Der Pedalhebel 3 wird vorzugsweise direkt vom Fahrerfuß betätigt. Es ist aber auch möglich, am Pedalhebel 3 über ein einfaches Gestänge ein separates Gaspedal anzulenken.

Der Pedalhebel 3 ist an der Lagerstelle 9 gegenüber der Haltestruktur 2 schwenkbar gelagert. Der Sensor 5 sensiert die Stellung des Pedalhebels 3 und liefert ein der Stellung des Pedalhebels 3 entsprechendes Signal über in der Figur 1 gestrichelt dargestellte elektrische Leitungen an eine Steuerung 14.

Der Schalter 6 liefert bei einer bestimmten Stellung des Pedalhebels 3 ein Signal über eine gestrichelt dargestellte elektrische Leitung an die Steuerung 14. Der Schalter 6 kann beispielsweise vorgesehen sein, um festzustellen, ob der Pedalhebel 3 unbetätigt ist und/oder ob der Pedalhebel 3 maximal betätigt ist. Je nach Anwendungsfall kann auf den Schalter 6 verzichtet werden.

Die Kick-Down-Mechanik 7 sorgt dafür, daß bei einer bestimmten Stellung des Pedalhebels 3 die Kraft, mit der der Pedalhebel 3 betätigt werden muß, sprunghaft ansteigt. Je nach Anwendungsfall, insbesondere je nach Art der Antriebsmaschine 16, ist die Kick-Down-Mechanik 7 vorhanden bzw. es wird auf die Kick-Down-Mechanik 7 verzichtet.

Der Schalter 6 und die Kick-Down-Mechanik 7 sind bei den für die Beschreibung ausgewählten besonders vorteilhaften Ausführungsbeispielen durch einen einfachen Schnappmechanismus so angebracht, daß diese Teile bei Bedarf ohne sonstige Änderungen auch weggelassen werden können. An der Stelle des Schalters 6 bzw. der Kick-Down-Mechanik 7 kann problemlos beispielsweise ein fester Anschlag vorgesehen werden, der ebenfalls über einen Schnappmechanismus befestigt ist. Dies erleichtert die Anpassung des Fahrpedalmoduls 1 an fahrzeugspezifische Anforderungen wesentlich. Der feste Anschlag kann z. B. zur Begrenzung einer Vollaststellung V dienen.

Beim Sensor 5 ist eine Sensorrückstellfeder 11 vorgesehen. Die Sensorrückstellfeder 11 sorgt dafür, daß der bewegliche Teil des Sensors 5 spielfrei jeder Bewegung des Pedalhebels 3 folgen kann. Um die Sicherheit wesentlich zu verbessern, wird vorgeschlagen, zusätzlich eine Rückstellsicherung 10 vorzusehen. Die Rückstellsicherung 10 sorgt dafür, daß bei einem Ausfall der Sensorrückstellfeder 11 der bewegliche Teil des Sensors 5 vom Pedalhebel 3 mitgenommen wird. Durch die Rückstellsicherung 10 gelangt der bewegliche Teil des Sensors 5 auch bei Ausfall der Sensorrückstellfeder 11 in eine Sicherheitsstellung, in der beispielsweise die Leistung der Antriebsmaschine 16 so klein ist, daß das Kraftfahrzeug zumindest nicht beschleunigt. Die Rückstellsicherung 10 greift mit etwas Spiel am beweglichen Teil des Sensors 5 an. Das bei Ausfall der Sensorrückstellfeder 11 auftretende Spiel zwischen dem beweglichen Teil des Sensors 5 und dem Pedalhebel 3 ist allenfalls ein kleiner Schönheitsfehler und kann problemlos akzeptiert werden.

In Abhängigkeit von den vom Sensor 5 und vom Schalter 6, sowie gegebenenfalls von weiteren an die Steuerung 14 gelieferten Signalen, steuert die Steuerung 14 die Leistung der in der Figur 1 symbolhaft dargestellten Antriebsmaschine 16. Die Antriebsmaschine 16 ist beispielsweise ein Ottomotor, ein Dieselmotor, ein Hybridmotor, ein Elektromotor oder dergleichen.

An der Haltestruktur 2 sind ein Vollastanschlag 18 und ein Ruheanschlag 20 vorgesehen. Wird der Pedalhebel 3 vom Fahrzeugführer nicht betätigt, dann befindet sich der Pedalhebel 3, getrieben von der Rückstellfederung 8, am Ruheanschlag 20. Diese Stellung wird nachfolgend als Ruhestellung R bezeichnet. Der Fahrzeugführer kann den Pedalhebel 3 betätigen, bis der Pedalhebel 3 am Vollastanschlag 18 zur Anlage kommt. Diese Stellung des Pedalhebels 3 am Vollastanschlag 18, wird nachfolgend als Vollaststellung V bezeichnet. Die Vollaststellung V des Pedalhebels 3 ist in der Figur 1 durch eine strichpunktierte Linie symbolhaft dargestellt.

Befindet sich der Pedalhebel 3 in der Ruhestellung R, dann arbeitet die Antriebsmaschine 16 beispielsweise mit minimaler Leistung, sofern nicht aufgrund von Signalen eines Gebers 21 die Antriebsmaschine 16 mit höherer Leistung arbeitet. Der Geber 21 ist z. B. ein Temperatursensor, ein automatischer Geschwindigkeitsgeber oder dergleichen. Je nach Art des Fahrzeugs kann bei Stellung des Pedalhebels 3 in der Ruhestellung R die Antriebsmaschine 16 auch abgeschaltet sein.

Im Bereich der Lagerstelle 9 gibt es eine Schwenkachse 22. Die Schwenkachse 22 verläuft senkrecht zur in der Figur 1 dargestellten Bildebene und ist der Schwenkmittelpunkt um den der Pedalhebel 3 geschwenkt werden kann. Die Schwenkachse 22 ist in der Zeichnung (Fig. 1) durch zwei senkrecht zueinander stehende kurze Striche (+) symbolhaft angedeutet. Der Pedalhebel 3 ist über einen Betätigungswinkel alpha (α) verstellbar. Der Betätigungswinkel alpha (α) beträgt beispielsweise 15°.

Durch Schwenken des Pedalhebels 3 um die Schwenkachse 22 über den Betätigungswinkel alpha (α) kann der Fahrer den Pedalhebel 3 von der Ruhestellung R in die Vollaststellung V betätigen. Bei Nichtbetätigung des Pedalhebels 3 sorgt die Rückstellfederung 8 dafür, daß der Pedalhebel 3 in die Ruhestellung R gelangt.

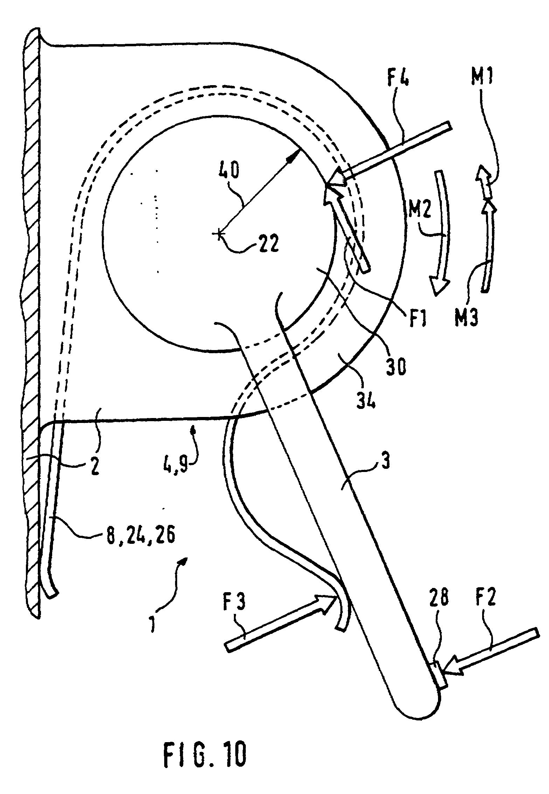

Die Rückstellfederung 8 umfaßt mehrere Rückstellfedern 24, 26. Die Rückstellfederung 8 ist so ausgeführt, daß bei Ausfall einer der Rückstellfedern 24, 26 die Rückstellkraft F3 (Fig. 10) der übrigen Rückstellfeder bzw. der übrigen Rückstellfedern zur sicheren Zurückstellung des Pedalhebels 3 in die Ruhestellung R ausreicht. Es hat sich gezeigt, daß die Verwendung zweier Rückstellfedern 24, 26 für die Rückstellfederung 8 mit Blick auf den Bauaufwand und die erzielbare Sicherheit optimal ist. Die Aufteilung der Rückstellfederung 8 in drei Rückstellfedern oder in noch mehr Rückstellfedern ist ebenfalls möglich, dürfte aber auch bei hohen Sicherheitsanforderungen nicht notwendig sein.

In der Figur 1 ist die Reibeinrichtung 4 der besseren Übersichtlichkeit wegen als separates zwischen dem Pedalhebel 3 und der Haltestruktur 2 wirkendes Element symbolhaft dargestellt. Wie nachfolgend noch ausführlich beschrieben, ist bei dem vorgeschlagenen Fahrpedalmodul 1 die Reibeinrichtung 4 direkt in die Lagerstelle 9 integriert, was unter anderem bezüglich der Funktion, der Anpassungsfähigkeit des Fahrpedalmoduls 1 an unterschiedliche Bedingungen verschiedener Kraftfahrzeuge, sowie der Anzahl der erforderlichen Bauteile und des sonstigen Bauaufwands und der Baugröße erhebliche Vorteile bietet. Dies wird anhand der nachfolgend beschriebenen Figuren noch ausführlich erläutert.

Die Figur 10 zeigt das Fahrpedalmodul 1 in stark schematisierter Form.

In allen Figuren sind gleiche oder gleichwirkende Teile mit denselben Bezugszeichen versehen.

Sofern nichts Gegenteiliges erwähnt bzw. in der Zeichnung dargestellt ist, gilt das anhand eines der Figuren Erwähnte und Dargestellte auch bei den anderen Ausführungsbeispielen. Sofern sich aus den Erläuterungen nichts anderes ergibt, sind die Einzelheiten der verschiedenen Ausführungsbeispiele miteinander kombinierbar.

Die Figur 10 läßt mit einem Blick leicht die auf den Pedalhebel 3 einwirkenden Kräfte und Drehmomente erkennen. Die auf den Pedalhebel 3 einwirkenden Kräfte sind mit dem Buchstaben F versehen. Die auf den Pedalhebel 3 einwirkenden Drehmomente sind mit einem M versehen. Die Figur 10 zeigt die auf den Pedalhebel 3 einwirkenden Kräfte F1 bis F4 und die Drehmomente M1 bis M3 während einer gleichmäßigen Verstellung des Pedalhebels 3 im Uhrzeigersinn um die Schwenkachse 22, d. h. während einer Verstellung des Pedalhebels 3 in Richtung Vollaststellung V (Fig. 1).

Die Reibeinrichtung 4 sorgt für eine eine Schwenkbewegung des Pedalhebels 3 behindernde Reibhysterese. Sowohl bei Betätigung des Pedalhebels 3 von der Ruhestellung R in die Vollaststellung V als auch bei Betätigung des Pedalhebels 3 von der Vollaststellung V in die Ruhestellung R sorgt die Reibeinrichtung 4 für eine Reibkraft zwischen dem Pedalhebel 3 und der Haltestruktur 2. Die während einer Verstellung des Pedalhebels 3 in die Vollaststellung V auf den Pedalhebel 3 wirkende Reibkraft wird nachfolgend als Reibkraft F1 bezeichnet und ist in der Figur 10 durch einen Pfeil mit dem Bezugszeichen F1 symbolisiert. Die Reibkraft F1 wirkt auf einen an den Pedalhebel 3 drehfest angeformten Lagerzapfen 30. Der Lagerzapfen 30 hat einen groß gewählten Radius, nachfolgend als Lagerradius 40 bezeichnet. Der Lagerzapfen 30 ist in einer an die Haltestruktur 2 drehfest angeformten bzw. drehfest anmontierten Lagerschale 34 drehbar gelagert. Die zwischen dem Pedalhebel 3 und der Haltestruktur 2 auf den Pedalhebel 3 einwirkende Reibkraft F1 bewirkt ein der Schwenkbewegung des Pedalhebels 3 entgegengerichtetes Drehmoment. Dieses Drehmoment wird nachfolgend als Reibmoment M1 bezeichnet. Das der Schwenkbewegung entgegengerichtete Reibmoment M1 ergibt eine die Schwenkbewegung des Pedalhebels 3 behindernde Reibhysterese.

Am der Schwenkachse 22 abgewandten Ende trägt der Pedalhebel 3 eine Pedalplatte 28. Zum Verstellen des Pedalhebels 3 drückt der Kraftfahrzeugführer mit einer Pedalkraft F2 auf die Pedalplatte 28. Die Pedalkraft F2 ergibt ein Betätigungsmoment M2 auf den Pedalhebel 3 im Uhrzeigersinn um die Schwenkachse 22. Die Rückstellkraft F3 der Rückstellfederung 8 ergibt ein Rückstellmoment M3 auf den Pedalhebel 3 um die Schwenkachse 22 entgegen dem Uhrzeigersinn. Bei Bewegung des Pedalhebels 3 in die Vollaststellung V wirkt das Reibmoment M1 entgegen dem Uhrzeigersinn, und bei Bewegung des Pedalhebels 3 in Richtung Ruhestellung R wirkt das Reibmoment M1 im Ohrzeigersinn auf den Pedalhebel 3. Zum Verstellen des Pedalhebels 3 in Richtung Vollaststellung V muß das Betätigungsmoment M2 mindestens so groß sein wie das Rückstellmoment M3 der Rückstellfederung 8 plus dem Reibmoment M1. Die entgegengesetzte Verstellung des Pedalhebels 3 erfolgt erst dann, wenn das Betätigungsmoment M2 kleiner als das Rückstellmoment M3 der Rückstellfederung 8 abzüglich dem Reibmoment M1 ist. Durch das Reibmoment M1 entsteht eine Hysterese, die dafür sorgt, daß der Pedalhebel 3 nicht bereits bei kleinen Änderungen der auf die Pedalplatte 28 wirkenden Pedalkraft F2 bzw. des Betätigungsmoments M2 ungewollt eine Bewegung ausführt.

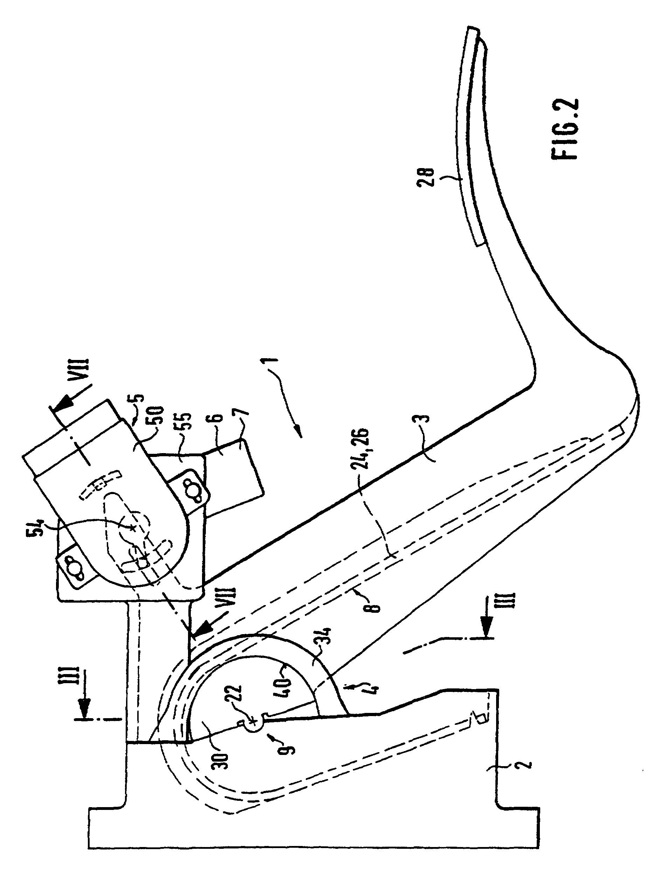

Die Figur 2 zeigt eine Seitenansicht eines ausgewählten, besonders vorteilhaften Ausführungsbeispiels.

In der Figur 2 erkennt man ein beispielhaft ausgewähltes, vorteilhaft ausgeführtes Fahrpedalmodul 1 in Seitenansicht mit der Haltestruktur 2, dem Pedalhebel 3, der Reibeinrichtung 4, dem Sensor 5, dem Schalter 6, der Kick-Down-Mechanik 7, der Rückstellfederung 8 und der Lagerstelle 9. An den Pedalhebel 3 ist die Pedalplatte 28 angeformt. Zum Erhöhen der Leistung der Antriebsmaschine 16 (Fig. 1) drückt der Fahrzeugführer mit seinem Fuß auf die Pedalplatte 28.

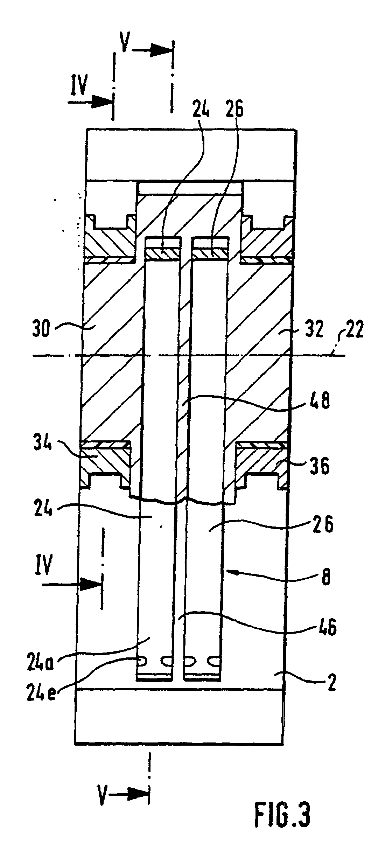

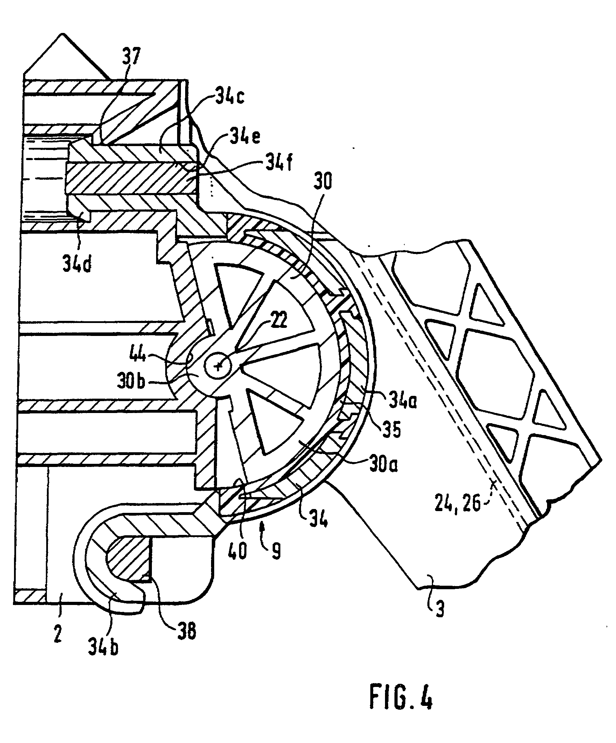

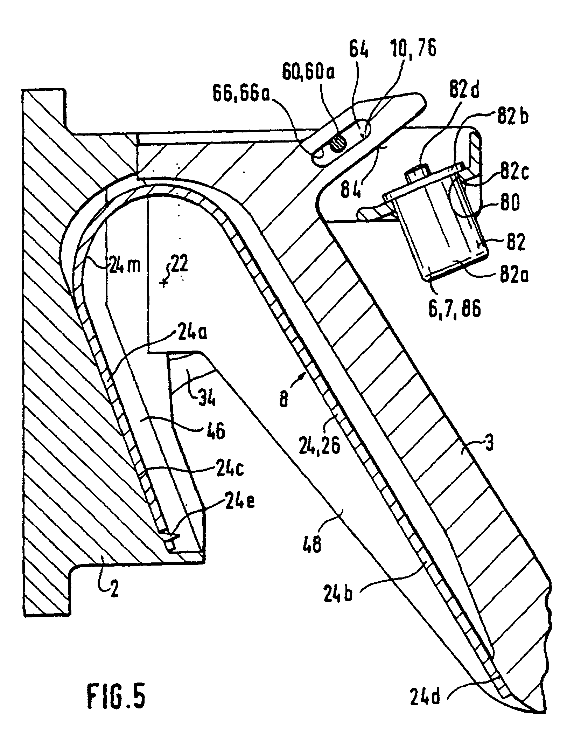

Die Figur 3 zeigt einen Schnitt durch das Fahrpedalmodul 1 entlang der in der Figur 2 mit strichpunktierten Linien angedeuteten Schnittebene III-III. Die Figur 4 zeigt einen Ausschnitt der in der Figur 3 angedeuteten Schnittebene IV-IV. Zwecks besserer zeichnerischer Wiedergabemöglichkeit ist in der Figur 4 der Bereich um die Lagerstelle 9 mit dem Lagerzapfen 30 und der Lagerschale 34 mit geändertem Maßstab wiedergegeben. In der Figur 4 sieht man nur einen Ausschnitt der Haltestruktur 2 und des Pedalhebels 3. In der Figur 5 ist eine in der Figur 3 mit V-V bezeichnete Schnittebene dargestellt.

An den Pedalhebel 3 ist der Lagerzapfen 30 und, wie die Figur 3 zeigt, ein weiterer Lagerzapfen 32 angeformt. An der Haltestruktur 2 sind die Lagerschale 34 und eine weitere Lagerschale 36 befestigt. In Längsrichtung des Pedalhebels 3 betrachtet befindet sich beiderseits des Pedalhebels 3 je eine der beiden Lagerschalen 34, 36 und je ein Lagerzapfen 30, 32. Dadurch ergibt sich eine besonders zuverlässige, stabile beidseitige Lagerung des Pedalhebels 3.

An die Haltestruktur 2 sind eine Querstrebe 38 und eine abgestuft ausgeführte Öffnung 37 angeformt (Fig. 4).

Die Lagerschale 34 kann gedanklich unterteilt werden in einen mittleren Bereich 34a, einen ersten Endbereich 34b und in einen zweiten Endbereich 34c (Fig. 4). Der mittlere Bereich 34a ist bogenförmig gestaltet und hat an der Innenseite des Bogens den mit dem Bezugszeichen 40 versehenen Lagerradius. Der erste Endbereich 34b ist hakenartig geformt und an der Querstrebe 38 eingehängt. Der zweite Endbereich 34c der Lagerschale 34 hat eine abgestuft ausgeführte zylinderartige Form. Am Außenumfang des zweiten Endbereichs 34c ist ein umlaufender Vorsprung 34d vorgesehen. Dieser Vorsprung 34d ist so gestaltet, daß bei der Montage der Lagerschale 34 an die Haltestruktur 2 der zweite Endbereich 34c mit mäßiger Kraft in die Öffnung 37 hineingedrückt werden kann, aber wegen dem umlaufenden Vorsprung 34d wird ein Herausrutschen des zweiten Endbereichs 34c aus der Öffnung 37 verbindert. Ein Bolzen 34f dient zur Erhöhung der Sicherheit gegen Herausrutschen. Dazu hat der zylinderartige zweite Endbereich 34c eine Bohrung 34e. Nach der Montage des zweiten Endbereichs 34c in die Öffnung 37 der Haltestruktur 2 wird der eng sitzende Bolzen 34f in die Bohrung 34e hineingepreßt. Der Bolzen 34f verstärkt die Haltewirkung des Vorsprungs 34d beträchtlich. Der Bolzen 34f wird so weit in die Bohrung 34e hineingepreßt, bis der Bolzen 34f an der von außen sichtbaren Oberfläche der Lagerschale 34 bündig abschließt.

In bzw. an der Haltestruktur 2 ist eine Pedalhebelführung 44 (Fig. 4) vorgesehen. Die Pedalhebelführung 44 hat einen Radius, der wesentlich kleiner ist als der Lagerradius 40.

Im Querschnitt betrachtet (Fig. 4), kann der Lagerzapfen 30 unterteilt werden in einen Reibabschnitt 30a und in einen Führungsabschnitt 30b.

Der Außenradius des Reibabschnitts 30a ist dem Lagerradius 40 angepaßt und zwar so, daß der Reibabschnitt 30a ohne zu klemmen in den schalenförmigen mittleren Bereich 34a der Lagerschale 34 paßt. Nachfolgend wird näherungsweise vereinfachend angenommen, daß der Radius am Außenumfang des Reibabschnitts 30a mit dem Lagerradius 40 identisch ist.

Der Außenradius des Führungsabschnitts 30b des Lagerzapfens 30 ist dem Innenradius der Pedalhebelführung 44 angepaßt und zwar so, daß sich an dieser Stelle eine Führung des Pedalhebels 3 an der Haltestruktur 2 ergibt. Im montierten Zustand hält die Lagerschale 34 den Führungsabschnitt 30b des Lagerzapfens 30 in der an der Haltestruktur 2 vorgesehenen Pedalhebelführung 44.

Der Berührradius zwischen der Pedalhebelführung 44 und dem Führungsabschnitt 30b des Lagerzapfens 30 ist relativ klein gewählt, damit es hier zu keiner nennenswerten Reibwirkung zwischen dem Pedalhebel 3 und der Haltestruktur 2 kommt. Da die Reibung an dieser Stelle von verschiedenen Umständen abhängt, z. B. von Fertigungstoleranzen, Verschleißzustand, Auftreten von auf den Pedalhebel 3 ggf. schräg ein wirkender Kräfte usw., es ist zweckmäßig diese Stelle so auszubilden, daß die hier auftretende Reibkraft bzw. das Reibmoment vernachlässigbar ist.

Wie man der Zeichnung (insbes. Fig. 3) entnehmen kann, umfaßt die Rückstellfederung 8 bei dem dargestellten, besonders vorteilhaften Ausführungsbeispiel zwei Rückstellfedern 24, 26, wobei beide Rückstellfedern 24, 26 auf besonders geschickte Weise in Form zweier Blattfedern 24 und 26 (insbes. Fig. 5, 6) ausgeführt sind.

Wie die Figur 5 zeigt, ist die Blattfeder 24 U-förmig gestaltet und hat einen Federschenkel 24a sowie einen Federschenkel 24b. Ein die beiden Federschenkel 24a, 24b verbindender kreisbogenförmig gebogener Bereich der Blattfeder 24 wird nachfolgend als mittlerer Federbereich 24m bezeichnet. Der Federschenkel 24a wirkt auf die Haltestruktur 2. Der andere Federschenkel 24b beaufschlagt den Pedalhebel 3 mit dem Bestreben, den Pedalhebel 3 in die Ruhestellung R (Fig. 1) zurückzuführen. Beide Blattfedern 24, 26 sind gleich geformt und gleichwirkend.

Die ungefähr U-förmige Gestalt der Blattfeder 24 kann so sein, daß die Federschenkel 24a, 24b parallel oder, ausgehend vom mittleren Federbereich 24m, konvergent oder divergent zueinander verlaufen. Dies hängt im wesentlichen von der Winkelstellung ab, die der Pedalhebel 3 gegenüber der Haltestruktur 2 einnimmt.

Die Blattfedern 24, 26 erzeugen eine Querkraft, die als Rückstellkraft F3 auf den Pedalhebel 3 wirkt (Fig. 10). Die Rückstellkraft F3 wirkt mit radialem Abstand zur Schwenkachse 22 auf den Pedalhebel 3. Die Rückstellkraft F3 und der radiale Abstand ergeben das auf den Pedalhebel 3 wirkende, bereits weiter vorne erwähnte Rückstellmoment M3. Das Rückstellmoment M3 wirkt auf den Pedalhebel 3 entgegen dem Uhrzeigersinn (Fig. 4, 5, 10).

Die von den Blattfedern 24, 26 erzeugte auf den Pedalhebel 3 wirkende Rückstellkraft F3 hat eine Reaktionskraft F4 zur Folge, mit der die Haltestruktur 2 im Bereich der Lagerstelle 9 auf den Pedalhebel 3 wirkt. Diese Reaktionskraft F4 ist betragsmäßig gleich groß wie die Rückstellkraft F3, mit der die Blattfedern 24, 26 auf den Pedalhebel 3 einwirken. Die Reaktionskraft F4 wird im Bereich der Lagerstelle 9 zwischen dem Reibabschnitt 30a des Lagerzapfens 30 und dem mittleren Bereich 34a der Lagerschale 34 aufgefangen (Fig. 4). Da die Blattfedern 24, 26 relativ weich ausgeführt werden können und sich somit bei Betätigung des Pedalhebels 3 die Rückstellkraft F3 über den gesamten Betätigungswinkel alpha (α) kaum ändert, ändert sich auch die Reaktionskraft F4 zwischen dem Reibabschnitt 30a des Lagerzapfens 30 und dem mittleren Bereich 34a der Lagerschale 34 genau so wenig. Die Reaktionskraft F4 zwischen den genannten Teilen im Bereich der Lagerstelle 9 ist insbesondere unabhängig von Fertigungstoleranzen im Bereich der Lagerstelle 9 und auch unabhängig von eventuell auftretendem Verschleiß. Ferner ist die Reaktionskraft F4 unabhängig von auf die Pedalplatte 28 einwirkenden Kräften. Da sich die Rückstellkraft F3, mit der die Blattfedern 24, 26 auf den Pedalhebel 3 einwirken, relativ einfach und genau konstruktiv dimensionieren läßt, kann die Reaktionskraft F4 zwischen dem Lagerzapfen 30 und der Lagerschale 34 konstruktiv einfach vorherbestimmt werden.

Mit der Wahl des Materials für den Reibabschnitt 30a des Lagerzapfens 30 und des mittleren Bereichs 34a der Lagerschale 30 erhält man einen konstruktiv genau vorherbestimmbaren Reibparameter my (µ) zwischen dem Lagerzapfen 30 und der Lagerschale 34.

Abhängig von der erwähnten Reaktionskraft F4 zwischen dem Lagerzapfen 30 und der Lagerschale 34, sowie abhängig vom Reibparameter my (µ) erhält man bei Betätigung des Pedalhebels 3 die am Umfang des Reibabschnitts 30a auf den Lagerzapfen 30 wirkende Reibkraft F1. Zusätzlich, abhängig vom Außenradius des Reibabschnitts 30a, der mit dem Lagerradius 40 identisch ist, ergibt die am Außenumfang des Reibabschnitts 30a wirkende Reibkraft F1 das dem Schwenken des Pedalhebels 3 entgegengerichtete Reibmoment M1. Dieses Reibmoment M1 sorgt dafür, daß z. B. ein leichtes Zittern des Fußes des Kraftfahrzeugführers, beispielsweise infolge von Überfahren von Unebenheiten, nicht zu einem ungewollten Verstellen des Pedalhebels 3 führt.

Da das Reibmoment M1 vom Außenradius des Reibabschnitts 30a, d.h. vom Lagerradius 40, abhängt, kann durch konstruktives Festlegen des Lagerradiusses 40 auf einfachste Weise Einfluß auf das Reibmoment M1 genommen werden. Damit das Reibmoment M1 ausreichend groß ist, ist der Lagerradius 40 ausreichend groß zu wählen.

Weil das Reibmoment M1 im wesentlichen im Bereich des Reibabschnitts 30a (Fig. 4) und nicht im Bereich des Führungsabschnitts 30b entsteht, ist der Lagerradius 40 vorzugsweise wesentlich größer als der Außenradius des Führungsabschnitts 30b des Lagerzapfens 30. Der Führungsabschnitt 30b hat einen für Lager üblichen, möglichst kleinen Außenradius.

An der Haltestruktur 2 ist eine Federanlage 24c (Fig. 5) vorgesehen, an der der Federschenkel 24a anliegt. Die Federanlage 24c ist so gestaltet, daß der Federschenkel 24a über ein längeres Stück an der Federanlage 24c anliegen kann. An einem dem mittleren Federbereich 24m abgewandten Ende des Federschenkels 24a ist eine Federfixierung 24e vorgesehen. Die Federfixierung 24e hat die Aufgabe, dafür zu sorgen, daß sich das äußere Ende des Federschenkels 24a der Blattfeder 24 gegenüber der Haltestruktur 2 nicht wesentlich verschieben kann.

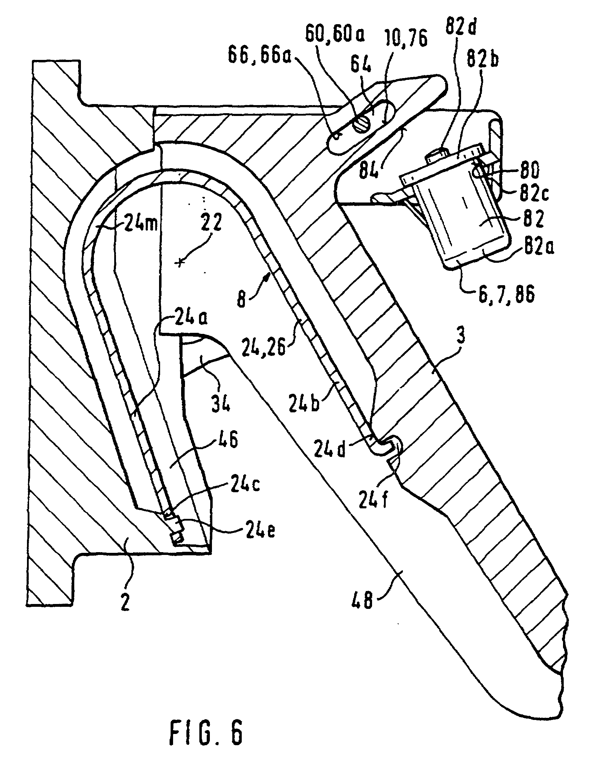

Im Bereich des äußeren Endes des Federschenkels 24b ist am Pedalhebel 3 eine Federanlage 24d (Fig. 5, 6) vorgesehen. Die Federanlage 24d ist so gestaltet, daß nur das dem mittleren Federbereich 24m abgewandte Ende des Federschenkels 24b am Pedalhebel 3 anliegt. Die vorgespannte Blattfeder 24 sorgt an der Federanlage 24d für die Rückstellkraft F3 (Fig. 10).

Die Blattfeder 24 ist vorzugsweise so eingebaut, daß der kreisförmig gebogene mittlere Federbereich 24m mit ungefähr konstantem Abstand um die Schwenkachse 22 verläuft. Damit wird erreicht, daß sich das nicht fixierte Ende des Federschenkels 24b (Fig. 5) während einer Schwenkung des Pedalhebels 3 nicht bzw. nur unwesentlich gegenüber dem Pedalhebel 3 verschiebt.

Die Figur 6 zeigt ein abgewandeltes Ausführungsbeispiel. Die hier dargestellte Schnittebene verläuft ebenfalls entlang der in der Figur 3 eingezeichneten strichpunktierten Linie V-V.

Im Gegensatz zur Figur 5 ist bei dem in der Figur 6 dargestellten Ausführungsbeispiel auch das dem mittleren Federbereich 24m abgewandte Ende des Federschenkels 24b am Pedalhebel 3 durch eine weitere Federfixierung 24f gegen eine Verschiebung fixiert. Da Toleranzen nie ganz auszuschließen sind, sind bei dem in der Figur 6 dargestellten Ausführungsbeispiel die Federanlagen 24c, 24d so gestaltet, daß nur die dem mittleren Federbereich 24m abgewandten Enden der Blattfeder 24 an der Haltestruktur 2 bzw. am Pedalhebel 3 anliegen. Bei einer Betätigung des Pedalhebels 3 können somit die nicht anliegenden Bereiche der Blattfeder 24, insbesondere der mittlere Federbereich 24m, gegebenenfalls auftretende seitliche Ausweichbewegungen ausführen. Dadurch ist sichergestellt, daß die Funktion des Fahrpedalmoduls 1 nicht durch kaum beherrschbare Reibung zwischen der Blattfeder 24 und dem Pedalhebel 3 bzw. der Haltestruktur 2 beeinflußt wird.

Wie die Figur 3 zeigt, umfaßt die Rückstellfederung 8 die beiden nebeneinander angeordneten Blattfedern 24 und 26. Die Blattfedern 24, 26 sind im Bereich der Haltestruktur 2 durch einen an die Haltestruktur 2 angeformten Steg 46 räumlich voneinander getrennt. Im Bereich des Pedalhebels 3 trennt ein Steg 48 die beiden Blattfedern 24, 26 voneinander. Der Steg 48 dient zusätzlich zur Versteifung des Pedalhebels 3, und der Steg 46 versteift die Haltestruktur 2. Die Blattfeder 26 ist in gleicher Weise geformt und angelenkt wie die Blattfeder 24.

Die Blattfedern 24, 26 können auf geschickte Weise eingebaut werden, ohne daß deswegen eine wesentliche Vergrößerung der Haltestruktur 2 bzw. des Pedalhebels 3 erforderlich ist. Die Biegesteifigkeit des Pedalhebels 3 wird durch die Aussparung zum Einbau der Blattfedern 24, 26 höchstens unwesentlich geschwächt. Um Material und Gewicht zu sparen, wird vorgeschlagen, den in den Figuren 5 und 6 als Schnittfläche schraffiert dargestellten Bereich an der Haltestruktur 2 und am Pedalhebel 3 zusätzlich mit weiteren Aussparungen bzw. Hohlräumen zu versehen, wie in der Figur 4 gezeigt. Dadurch wird die Festigkeit nicht merkbar gemindert, aber es ergibt sich eine deutliche Material- und Gewichtsersparnis.

Wie die Figuren 5 und 6 zeigen, sind die Aussparungen in der Haltestruktur 2 und im Pedalhebel 3, in denen die Blattfeder 24 eingelegt ist, so angeordnet, daß bei einem Bruch der Blattfeder 24 die gesamte gebrochene Blattfeder 24 bzw. ein Teil der Blattfeder 24 nach unten herausfallen kann. Dadurch kann ein Bruch der Blattfedern 24 leicht bemerkt werden. Entsprechendes gilt auch für die zweite Blattfeder 26.

Falls die Blattfeder 24 brechen sollte, dann fällt bei dem dargestellten Ausführungsbeispiel zumindest der am Pedalhebel 3 angreifende Federschenkel 24b heraus. Die Federfixierung 24e und/oder die Federfixierung 24f ist so ausgeführt, daß ein Herausfallen des Federschenkels 24a bzw. 24b nicht behindert wird. Das Fehlen des Federschenkel 24a und/oder des Federschenkel 24b kann bei einer Inspektion des Kraftfahrzeugs leicht festgestellt werden. Entsprechendes gilt auch für die Blattfeder 26.

Die Rückstellfedern 24, 26 der Rückstellfederung 8 bestimmen das Rückstellmoment M3 (Fig. 10) zur Rückstellung des Pedalhebels 3 in die Ruhestellung R (Fig. 1). Bei einem Bruch einer der beiden Rückstellfedern 24, 26 halbiert sich das Rückstellmoment M3 zur Rückstellung des Pedalhebels 3 in die Ruhestellung R. Wie bereits weiter vorne erläutert, bestimmen die Rückstellfedern 24, 26 auch das die Schwenkbewegung des Pedalhebels 3 behindernde Reibmoment M1 bzw. die Reibhysterese. Bei einem Ausfall einer der Blattfedern 24, 26 halbiert sich das Rückstellmoment M3 und gleichzeitig auch das Reibmoment M1 bzw. die Reibhysterese. Dadurch ist gewährleistet, daß auch bei reduziertem Rückstellmoment M3, durch die gleich große Reduzierung des Reibmoment M1, das Zurückstellen des Pedalhebels 3 in die Ruhestellung R gewährleistet ist.

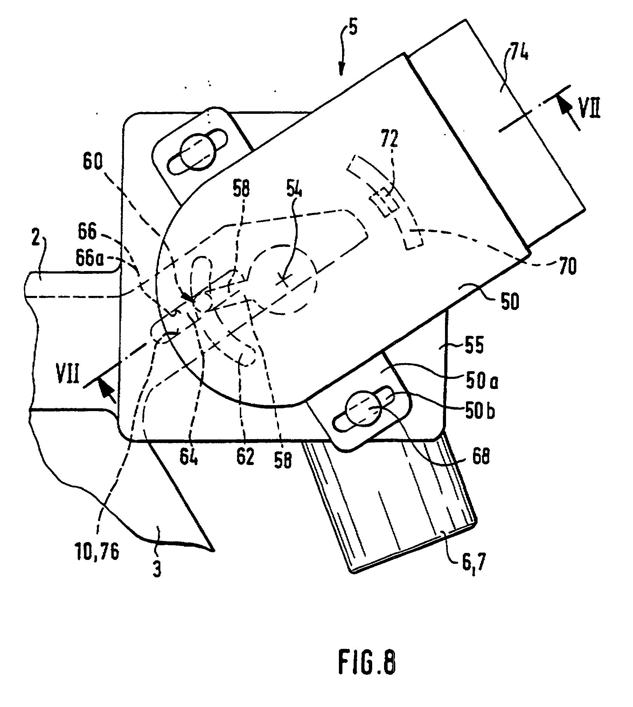

Zwecks besserer Übersichtlichkeit zeigt die Figur 8 mit geändertem Maßstab einen Ausschnitt aus der Figur 2, mit dem Bereich um den Sensor 5.

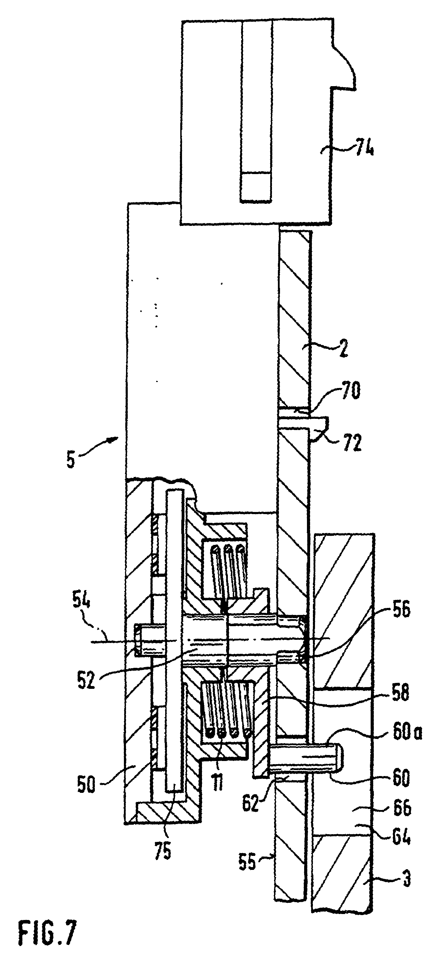

Der Sensor 5 ist an der Haltestruktur 2 befestigt (Fig. 2 u. 8). Zwecks besserem Verständnis zeigt die Figur 7 zusätzlich einen Ausschnitt eines Querschnitts entlang der in den Figuren 2 und 8 mit VII-VII bezeichneten strichpunktierten abgeknickten Linie.

Der Sensor 5 hat ein Sensorgehäuse 50 (Fig. 7 u. 8). Aus dem Sensorgehäuse 50 ragt eine drehbar gelagerte Welle 52 (Fig. 7) heraus. Die Drehachse der Welle 52 wird nachfolgend als Sensorhebeldrehachse 54 bezeichnet. Die Sensorhebeldrehachse 54 verläuft senkrecht zur in den Figuren 2 und 8 dargestellten Bildebene. In den Figuren 2 und 8 ist die Sensorhebeldrehachse 54 mit zwei kurzen gekreuzten Strichen (+) und in der Figur 7 mit einer strichpunktierten Linie symbolhaft dargestellt.

An die Haltestruktur 2 ist eine Sensorhaltefläche 55 angeformt. An der Sensorhaltefläche 55 wird der Sensor 5 befestigt. In der Sensorhaltefläche 55 der Haltestruktur 2 ist eine als Sensorführung 56 dienende Bohrung vorgesehen. In dieser Sensorführung 56 ist die aus dem Sensorgehäuse 50 herausragende Welle 52 mit engem Spiel drehbar gelagert. Ein Sensorhebel 58 ist mit der Welle 52 drehfest verbunden. Mit radialem Abstand zur Sensorhebeldrehachse 54 ist am Sensorhebel 58 eine Sensorhebelanlenkung 60 vorgesehen. Bei dem dargestellten Ausführungsbeispiel wird die Sensorhebelanlenkung 60 von einem parallel zur Sensorhebeldrehachse 54 an dem Sensorhebel 58 befestigten Stift 60a gebildet. In der Haltestruktur 2, genauer in der Sensorhaltefläche 55, ist ein Langloch 62 vorgesehen. Das Langloch 62 ist so dimensioniert, daß der Sensorhebel 58 ohne Behinderung die erforderlichen Schwenkbewegungen ausführen kann.

Im Pedalhebel 3 ist ein Langloch 64 vorgesehen (Fig. 5, 6). Eine Längsseite des Langlochs 64 dient als Anschlag 66a und bildet eine Pedalhebelanlenkung 66. Die Pedalhebelanlenkung 66 und die Sensorhebelanlenkung 60 sind so gestaltet, daß der Pedalhebel 3 den Sensorhebel 58 entgegen der Sensorrückstellfeder 11 verstellen kann (Fig. 1, 7).

Die Sensorrückstellfeder 11 wirkt einerseits auf das Sensorgehäuse 50 und andererseits auf den Sensorhebel 58 (Fig. 7). Bei Blickrichtung gemäß Figur 8 wirkt die Sensorrückstellfeder 11 auf den Sensorhebel 58 im Uhrzeigersinn. Die Sensorrückstellfeder 11 sorgt dafür, daß der Stift 60a der Sensorhebelanlenkung 60 in ständigem spielfreien Eingriff mit dem Anschlag 66a der Pedalhebelanlenkung 66 steht (Fig. 8).

Eine Schwenkbewegung des Pedalhebels 3 bedeutet eine Schwenkbewegung der Pedalhebelanlenkung 66 um die Schwenkachse 22, und dies wiederum führt zu einer Schwenkbewegung der Sensorhebelanlenkung 60 um die Sensorhebeldrehachse 54. Durch Wahl des Abstandes zwischen der Pedalhebelanlenkung 66 und der Schwenkachse 22 (Fig. 2) bzw. des Abstandes zwischen der Sensorhebelanlenkung 60 und der Sensorhebeldrehachse 54 kann die Übersetzung, mit der eine Drehbewegung des Pedalhebels 3 in eine Drehbewegung der Welle 52 übergeführt werden soll, auf einfache Weise konstruktiv festgelegt und fahrzeugspezifisch angepaßt werden.

Der Sensor 5 ist, weil hohe Forderungen an ihn gestellt werden müssen, ein komplexes Bauteil, das nur dann zu niedrigen Herstell-Stückkosten gefertigt werden kann, wenn große Stückzahlen je Fertigungslos anfallen, wobei jede Ausführungsvariante die Herstell-Stückkosten merkbar nach oben treibt. Bei dem vorgestellten Fahrpedalmodul 1 hat man den Vorteil, daß der Sensor 5 unverändert bei den unterschiedlichsten fahrzeugspezifischen Anforderungen verwendet werden kann. Durch entsprechende Wahl des Abstandes zwischen der Schwenkachse 22 und dem Anschlag 60a der Pedalhebelanlenkung 66 kann die Übersetzung zwischen dem Pedalhebel 3 und dem Sensor 5 auf einfache Weise dem jeweiligen Bedarf angepaßt werden. D. h., der Pedalhebel 3 kann so ausgeführt werden, daß auch bei den unterschiedlichsten fahrzeugspezifischen Pedalwegen stets der vorgesehene maximale Meßweg des Sensors 5 ausgenützt werden kann, ohne daß dazu der Sensor 5 speziell angepaßt werden muß. Da es sich wegen verschiedenster Gründe (z. B. optische Gründe, unterschiedlicher Fußraum im Fahrzeuginneren, Ergonomie usw.) kaum umgehen läßt, den Pedalhebel 3 dem jeweiligen Fahrzeugtyp anzupassen, bedeutet eine Anpassung der Übersetzung zwischen dem Schwenkwinkel des Pedalhebels 3 und dem Schwenkwinkel des Sensorhebels 58 durch entsprechende Anpassung des Abstandes zwischen der Pedalhebelanlenkung 66 und der Schwenkachse 22 keinerlei zusätzlichen Aufwand. Weil normalerweise für jeden Fahrzeugtyp eine spezielle Form für den Pedalhebel 3 gemacht werden muß, kann dabei ohne zusätzlichen Aufwand der Abstand zwischen der Schwenkachse 22 und der Pedalhebelanlenkung 66 der erforderlichen Übersetzung entsprechend angepaßt werden.

Der Betätigungswinkel alpha (α) des Pedalhebels 3 ist mit ungefähr 12° bis 20° normalerweise relativ klein. Deshalb wird vorgeschlagen, den Abstand zwischen der Schwenkachse 22 und der Pedalhebelanlenkung 66 ausreichend groß zu wählen, damit der volle Schwenkwinkel des Sensorhebels 58 voll ausgenützt werden kann. Der Schwenkwinkel des Sensorhebels 58 sollte wegen guter Auflösung möglichst groß sein. Beim vorgeschlagenen Fahrpedalmodul 1 kann man durch entsprechende Dimensionierung des Abstands zwischen der Schwenkachse 22 und der Pedalhebelanlenkung 66 ohne Aufwand jede gewünschte Übersetzung erhalten.

An das Sensorgehäuse 50 sind seitlich zwei Flansche 50a angeformt (Fig. 8). In den Flanschen 50a sind Langlöcher 50b vorgesehen. Zur Anbringung des Sensors 5 an der Haltestruktur 2 ist die Sensorhaltefläche 55 plattenförmig ausgebildet. Im Bereich der Sensorhaltefläche 55 sind an die Haltestruktur 2 zwei Stifte 68 so angeformt, daß, beim Anbringen des Sensors 5 an die Sensorhaltefläche 55 und gleichzeitigem Einführen der Welle 52 in die Sensorführung 56 (Fig. 7), die Stifte 68 in die Langlöcher 50b eintauchen. Die Stifte 68 ragen auf der der Sensorhaltefläche 55 abgewandten Seite über die Flansche 50a hinaus. Die Langlöcher 50b sind so dimensioniert, daß der Sensor 5 bei der Montage bzw. zum Einstellen des Nullpunkts des Sensors 5 insgesamt etwas um den durch die Sensorführung 56 (Fig. 7) vorgegebenen Drehpunkt geschwenkt werden kann. Nach diesem Einstellen und Justieren des Sensors 5 werden die die Flansche 50a überragenden Stifte 68 auf der die Flansche 50a überragenden Seite erhitzt und gedrückt. Dadurch weitet sich der überragende Bereich der Stifte 68 aus, und der Sensor 5 wird auf diese Weise an der Haltestruktur 2 fixiert. Dies verhindert ein ungewolltes Verstellen des Sensors 5. Die Figur 8 zeigt die Stifte 68 nach erfolgter Fixierung des Sensors 5.

Zur Erleichterung der Montage des Sensors 5 an die Haltestruktur 2 und als zusätzliche Haltemaßnahme sind in der Haltestruktur 2 ein Langloch 70 und am Sensorgehäuse 50 ein Haken 72 vorgesehen (Fig. 7, 8). Das Langloch 70 erstreckt sich konzentrisch um die Sensorführung 56. Beim Aufstecken des Sensors 5 bzw. beim Einführen der Welle 52 in die Sensorführung 56 verhakt sich der Haken 72 durch das Langloch 70 mit der Haltestruktur 2. Dadurch wird der Sensor 5 an der Haltestruktur 2 bereits festgehalten, bevor die erwähnte Fixierung des Sensors 5 mit Hilfe der erwärmbaren Stifte 68 erfolgt. Zusätzlich sorgt der Haken 72 für eine weitere Befestigungsstelle des Sensors 5 an der Haltestruktur 2.

In bzw. an den Sensor 5 ist ein Stecker 74 integriert. Das Gehäuse des Steckers 74 wird gemeinsam mit dem Sensorgehäuse 50 als Kunststoffteil geformt. Der Stecker 74 dient zum Steckanschluß eines Kabels zur Zuleitung der vom Sensor 5 an die Steuerung 14 (Fig. 1) zu liefernden Sensorsignale.

Der Sensor 5 ist beispielsweise von potentiometrischer Bauart. Ein Schleiferhebel 75 ist drehfest mit der Welle 52 und damit drehfest mit der Sensorhebelanlenkung 60 verbunden (Fig. 7). Am Schleiferhebel 75 befinden sich Schleifer, die bei einer Schwenkbewegung des Sensorhebels 58 Widerstandsbahnen überstreichen, die im Sensorgehäuse 50 angebracht sind. Dadurch ändert sich ein elektrisches Signal, das über den Stecker 74 (Fig. 7) der Steuerung 14 (Fig. 1) zugeführt werden kann. Es ist möglich, anstatt des potentiometrisch arbeitenden Sensors 5 einen kontaktlos arbeitenden Sensor zu wählen.

Das Langloch 64 des Pedalhebels 3 hat zwei Längsseiten. Eine der beiden Längsseiten bildet den bereits erwähnten Anschlag 66a der Pedalhebelanlenkung 66. Die andere Längsseite dient als Gegenanschlag 76 (Fig. 5). Der Gegenanschlag 76 bildet zusammen mit dem Stift 60a der Sensorhebelanlenkung 60 die bereits bei Besprechung der Figur 1 hervorgehobene Rückstellsicherung 10. Im Normalfall liegt der Stift 60a der Sensorhebelanlenkung 60 ständig und spielfrei an dem Anschlag 66a der Pedalhebelanlenkung 66 an. Sollte im Falle eines Defektes, beispielsweise wegen eines Bruches der Sensorrückstellfeder 11 (Fig. 1 und 7), die Sensorrückstellfeder 11 ausfallen, dann sorgt der Gegenanschlag 76 der Rückstellsicherung 10 dafür, daß beim Loslassen der Pedalplatte 28 (Fig. 2), d. h. beim Verstellen des Pedalhebels 3 in die Ruhestellung R (Fig. 1), der Sensorhebel 58 ebenfalls in Rückstellrichtung mitgenommen wird. Durch die Ausführung der Rückstellfederung 8 in Form zweier Blattfedern 24, 26 ist sichergestellt, daß auch bei einem Ausfall einer der beiden Blattfedern 24, 26 der Pedalhebel 3 in seine Ruhestellung R gelangt. Ferner ist durch die zwischen dem Pedalhebel 3 und dem Sensorhebel 58 wirkende Rückstellsicherung 10 gewährleistet, daß der Sensor 5 beim Loslassen der Pedalplatte 28 unter allen Umständen in die Rückstellrichtung betätigt wird.

Zwischen dem Stift 60a und dem Gegenanschlag 76 besteht bei normalem Betriebszustand ein geringes Spiel, so daß sich der Stift 60a ohne Gefahr eines Klemmens oder hoher Reibung innerhalb des Langlochs 64 bewegen kann. Das Spiel zwischen dem Stift 60a und dem Gegenanschlag 76 der Rückstellsicherung 10 wird erst im Falle eines Ausfalls der Sensorrückstellfeder 11 überwunden, hat aber, da relativ klein, im Falle eines Defektes der Sensorrückstellfeder 11 keine ins Gewicht fallende negative Auswirkung.

In bzw. an der Haltestruktur 2 ist eine Aufnahmeöffnung 80 (Fig. 5, 6) vorgesehen. In der Aufnahmeöffnung 80 ist ein Gehäuse 82 befestigt. Das Gehäuse 82 dient zur Aufnahme der Kick-Down-Mechanik 7. Das Gehäuse 82 hat einen dünneren Bereich 82a, einen dickeren Bereich 82b und federnde Klauen 82c. Im Gehäuse 82 ist ein Stift 82d axial verschiebbar gelagert. Die Durchmesser sind so abgestimmt, daß der dünnere Bereich 82a in die Aufnahmeöffnung 80 paßt, bis der dickere Bereich 82b an der Haltestruktur 2 zur Anlage kommt. Die federnden Klauen 82c verhaken sich mit der Haltestruktur 2 und sorgen so dafür, daß das Gehäuse 82 nicht aus der Aufnahmeöffnung 80 herausfallen kann. Die Kick-Down-Mechanik 7 läßt sich durch Hineinstecken des Gehäuses 82 in die Aufnahmeöffnung 80 sehr leicht am Fahrpedalmodul 1 anbringen. Sollte während der Montage das Gehäuse 82 nicht vollständig in die Aufnahmeöffnung 80 hineingesteckt worden sein, dann wird spätestens mit der ersten kräftigen Betätigung des Pedalhebels 3 das Gehäuse 82 vollständig in die Aufnahmeöffnung 80 hineingesteckt. Das bringt hohe Sicherheit trotz wesentlich vereinfachter Montage.

Bei Betätigung des Pedalhebels 3 schwenkt der Pedalhebel 3 im Uhrzeigersinn (Fig. 5, 6). Dabei kommt bei bestimmter Winkelstellung ein am Pedalhebel 3 vorgesehener Anschlag 84 an dem Stift 82d zur Anlage. Die Kick-Down-Mechanik 7 ist so ausgebildet, daß nach Anlage des Anschlags 84 an dem Stift 82d bei weiterer Betätigung des Pedalhebels 3 der Stift 82d in das Gehäuse 82 hineingedrückt wird. Beim Hineinschieben des Stifts 82d in das Gehäuse 82 steigt an einer bestimmten Stelle die Rückstellkraft sprunghaft an. Dadurch steigt bei einer bestimmten Winkellage des Pedalhebels 3 die durch die Kick-Down-Mechanik 7 hervorgerufene zusätzlich erforderliche Pedalkraft sprunghaft an. Die Kick-Down-Mechanik 7 kann so ausgeführt sein, daß bei entgegengesetzter Betätigung des Pedalhebels 3, d. h. entgegen dem Uhrzeigersinn, in einer bestimmten Winkellage die Rückstellkraft sprunghaft abfällt. Anstatt der Kick-Down-Mechanik 7 kann in die Aufnahmeöffnung 80 auch ein anderes Funktionselement hineingesteckt werden. Wird die Kick-Down-Mechanik 7 nicht benötigt, dann kann in die Aufnahmeöffnung 80 beispielsweise ein fester Anschlag 86 hineingesteckt werden. Der feste Anschlag 86 hat beispielsweise äußerlich in etwa die gleiche Form wie das Gehäuse 82. Anstatt dem verschiebbaren Stift 82d bei der Kick-Down-Mechanik 7 ist beim festen Anschlag 86 der in Richtung des Anschlags 84 vorstehende Stift 82d fest fixiert.

Anstatt der Kick-Down-Mechanik 7 bzw. anstatt des festen Anschlags 86 kann in die Aufnahmeöffnung 80 auch der bereits anhand der Figur 1 erwähnte Schalter 6 eingebaut sein. Der Schalter 6 hat beispielsweise die gleichen äußeren Abmessungen wie das zusammen mit der Kick-Down-Mechanik 7 erläuterte Gehäuse 82.

Das Gehäuse 82 kann innerlich auch so aufgebaut sein, daß sich darin die Kick-Down-Mechanik 7 und der Schalter 6 befinden.

Die federnden Klauen 82c bilden einen einfach herzustellenden Schnappmechanismus bzw. eine Schnappfixierung zum leichten wahlweisen Anbau der Kick-Down-Mechanik 7 oder des Schalter 6 oder des festen Anschlag 86. Durch einfaches Auswechseln zwischen der Kick-Down-Mechanik 7 und dem festen Anschlag 86 bzw. dem Schalter 6 kann das Fahrpedalmodul 1 den jeweiligen fahrzeugspezifischen Anforderungen angepaßt werden. Beispielsweise wird bei einem Fahrzeug mit einem Automatikgetriebe häufiger die Kick-Down-Mechanik 7 benötigt, und bei Fahrzeugen mit einem Schaltgetriebe benötigt man normalerweise eher den festen Anschlag 86. Durch die Möglichkeit verschiedener Einsätze in der Aufnahmeöffnung 80 der Haltestruktur 2 werden die Anzahl unterschiedlicher herzustellender Varianten reduziert, was die Herstellkosten deutlich senkt.

Am Innenradius der Lagerschale 34 kann ein Reibbelag 35 angebracht sein (Fig. 4). Zur innigen Verbindung des Reibbelags 35 mit der Lagerschale 34 sind in der Lagerschale 34 Aussparungen vorgesehen. Der Reibbelag 35 wird an die Lagerschale 34 angegossen und verzahnt sich wegen den Aussparungen fest mit der Lagerschale 34. Der Reibbelag 35 ist vorgesehen, damit für den Verschleiß und die Reibung günstige Werte erzielt werden können und damit für die Lagerschale 34 ein festigkeitsmäßig günstiger Werkstoff gewählt werden kann. Anstatt an der Lagerschale 34 bzw. zusätzlich kann auch am Außenumfang des Reibabschnitts 30a des Lagerzapfens 30 ein Reibbelag aufgebracht sein. Diese Variante kann der Fachmann alternativ ausführen, ohne daß dazu eine bildliche Darstellung erforderlich ist.

Der Werkstoff des Reibbelags 35 wird vorzugsweise mit Blick auf niedrigen Verschleiß ausgewählt und auch so, daß die Reibung bei Bewegungsbeginn und während der Bewegung möglichst gleich groß ist.

Bei den für die Zeichnung und die nähere Beschreibung der Erfindung ausgewählten Ausführungsbeispielen ist die Lagerschale 34 mit der Haltestruktur 2 verbunden, und der Lagerzapfen 30 ist dem Pedalhebel 3 zugeordnet. Es sei darauf hingewiesen, daß das dargestellte Ausführungsbeispiel auch so abgewandelt werden kann, daß die Lagerschale 34 am Pedalhebel 3 befestigt wird und der Lagerzapfen 30 kann entsprechend an die Haltestruktur 2 angeformt sein. Diese Umkehrung bei der Anordnung der Lagerschale 34 und dem Lagerzapfen 30 kann der Fachmann äquivalent ausführen, ohne daß hierzu eine zusätzliche bildliche Darstellung erforderlich ist. Bei Verwendung zweier Lagerzapfen und zweier Lagerschalen kann eine der beiden Lagerschalen der Haltestruktur 2 und die jeweils andere Lagerschale dem Pedalhebel 3 zugeordnet sein. Entsprechendes gilt auch für die Lagerzapfen.

Bei den zeichnerisch dargestellten Ausführungsbeispielen ist die Aufnahmeöffnung 80 zum Aufnehmen der Kick-Down-Mechanik 7 bzw. des festen Anschlags 86 an der Haltestruktur 2 vorgesehen. Ferner befindet sich der mit der Kick-Down-Mechanik 7 bzw. mit dem festen Anschlag 86 in Eingriff gelangende Anschlag 84 am Pedalhebel 3. Es sei darauf hingewiesen, daß diese Anordnung umgekehrt werden kann. D. h., man kann die Aufnahmeöffnung 80 am Pedalhebel 3 vorsehen. In diesem Fall befindet sich die Kick-Down-Mechanik 7 bzw. der feste Anschlag 86 am Pedalhebel 3 und wird zusammen mit dem Pedalhebel 3 geschwenkt. Die am Pedalhebel 3 angeordnete Kick-Down-Mechanik 7 bzw. der feste Anschlag 86 kommt bei entsprechendem Schwenken des Pedalhebels 3 an einem an der Haltestruktur 2 vorgesehenen Anschlag zur Anlage. Diese Umkehrung der Anordnung der Kick-Down-Mechanik 7 bzw. des festen Anschlags 86 kann der Fachmann äquivalent ausführen, ohne daß dazu eine diese Abwandlung zeigende bildliche Darstellung erforderlich ist.

Bei den dargestellten Ausführungsbeispielen umfaßt die Sensorhebelanlenkung 60 den Stift 60a und die Pedalhebelanlenkung 66 den Anschlag 66a. Der Anschlag 66a verläuft im wesentlichen radial zur Schwenkachse 22. Das Fahrpedalmodul 1 kann auch so abgewandelt sein, daß sich der Anschlag am Sensorhebel 58 befindet und der Sensorhebelanlenkung 60 zugeordnet ist. Entsprechend befindet sich der Stift am Pedalhebel 3 und ist der Pedalhebelanlenkung 66 zugeordnet. Diese abgewandelte Ausführung kann der Fachmann äquivalent ohne die Unterstützung durch eine Zeichnung ausführen.

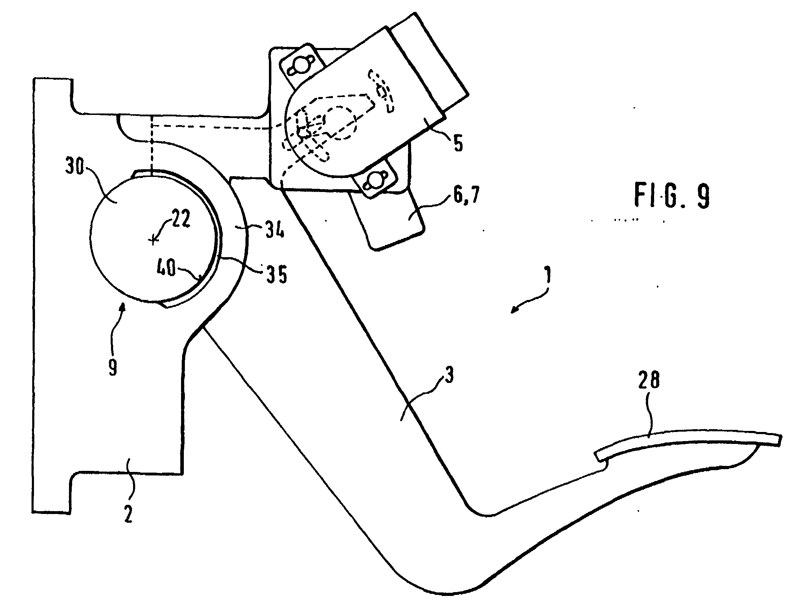

Die Figur 9 zeigt ein weiteres ausgewähltes, besonders vorteilhaftes, einfaches Ausführungsbeispiel.

Bei dem in der Figur 9 dargestellten Ausführungsbeispiel befindet sich die Bohrung mit dem Lagerradius 40 zur Aufnahme des mit dem Pedalhebel 3 verbundenen Lagerzapfens 30 direkt in der Haltestruktur 2. Bei diesem Ausführungsbeispiel ist die Lagerschale 34 nicht anmontiert, wie in der Figur 2 gezeigt, sondern einstückig an die Haltestruktur 2 angeformt. Die Lagerschale 34 ist als Bauteil vollständig in die Haltestruktur 2 integriert und kann zusammen mit dem übrigen Teil der Haltestruktur 2 als Kunststoffteil aus einer einzigen zusammenhängenden Spritzgußform gewonnen werden.

Die Montage des Pedalhebels 3 an die Haltestruktur 2 kann bei dem in der Figur 9 dargestellten Ausführungsbeispiel beispielsweise durch seitliches elastisches Wegbiegen einer die Lagerschale 34 tragenden Seitenwand, in der die Öffnung zur Aufnahme des Lagerzapfens 30 vorgesehen ist, erfolgen, so daß der Lagerzapfen 30 in diese Öffnung einschnappen kann.

Wie bereits erwähnt, bewirkt die Rückstellkraft F3 der Rückstellfederung 8 im Bereich der Lagerstelle 9 eine Reaktionskraft F4 auf den Pedalhebel 3. Die Reaktionskraft F4 bewirkt eine entgegengerichtete Gegenkraft auf die Lagerschale 34. Die Hauptrichtung der Gegenkraft auf die Haltestruktur 2 ist im wesentlichen, bezogen auf die Figuren 2 und 9, nach rechts gerichtet. Deshalb ist es im Prinzip ausreichend, wenn der Reibbelag 35 nur im rechten Bereich (bezogen auf die Zeichnung) an der Haltestruktur 2 und/oder am Lagerzapfen 30 angebracht ist, wie in den Figuren 4 und 9 dargestellt.

Bei dem in den Figuren 2 und 4 dargestellten Ausführungsbeispiel hat der Lagerzapfen 30 im Bereich des Reibabschnitts 30a einen größeren Durchmesser als im Bereich des Führungsabschnitts 30b. Der Reibabschnitt 30a und der Führungsabschnitt 30b erstrecken sich jeweils über ungefähr 180°. Es sei darauf hingewiesen, daß das Fahrpedalmodul 1, je nach Erfordernis, auch so abgewandelt werden kann, daß der Lagerzapfen 30 über den gesamten Umfang den gleichen Durchmesser hat, wie in der Figur 9 gezeigt.

## Patentansprüche

1. Fahrpedalmodul zum Steuern der Leistung einer Antriebsmaschine, mit einem über eine Lagerstelle an einer Haltestruktur (2) gelagerten um eine Schwenkachse (22) über einen Schwenkwinkel schwenkbaren Pedalhebel (3), wobei ein die Stellung des Pedalhebels (3) erfassender und ein entsprechendes elektrisches Signal an eine Steuerung liefernder Sensor (5) und eine Rückstellfederung (8) zum Rückstellen des Pedalhebels (3) in eine Ruhestellung (R) vorgesehen sind, **dadurch gekennzeichnet, daß** der Sensor (5) ein gegenüber der Haltestruktur (2) festlegbares Sensorgehäuse (50) und einen in dem Sensorgehäuse (50) um eine Sensorhebeldrehachse (54) schwenkbar gelagerten Sensorhebel (58) besitzt, dessen Schwenkstellung das elektrische Signal bestimmt, wobei an dem Sensorhebel (58) eine Sensorhebelanlenkung (60) mit radialem Abstand zur Sensorhebeldrehachse (54) und an dem Pedalhebels (3) eine mit der Sensorhebelanlenkung (60) in Eingriff stehende Pedalhebelanlenkung (66) mit radialem Abstand zur Schwenkachse (22) vorgesehen sind, wobei die Pedalhebelanlenkung (66) so mit dem Pedalhebel (3) verbunden ist, daß bei einer Schwenkbewegung des Pedalhebels (3) die Pedalhebelanlenkung (66) zusammen mit dem Pedalhebel (3) um die Schwenkachse (22) schwenkt und die Sensorhebelanlenkung (60) so mit dem Sensorhebel (58) verbunden ist, daß bei einer Schwenkbewegung des Sensorhebels (58) die Sensorhebelanlenkung (60) zusammen mit dem Sensorhebel (58) um die Sensorhebeldrehachse (54) schwenkt.

2. Fahrpedalmodul nach Anspruch 1, **dadurch gekennzeichnet, daß** das Sensorgehäuse (50) zum Justieren des elektrischen Signals um die Sensorhebeldrehachse (54) schwenkbar ist.'

3. Fahrpedalmodul nach Anspruch 1 oder 2, **dadurch gekennzeichnet, daß** die Pedalhebelanlenkung (66) am Pedalhebel (3) einen im wesentlichen radial zur Schwenkachse (22) verlaufenden, bei einer Betätigung des Pedalhebels (3) die Sensorhebelanlenkung (60) mitnehmenden Anschlag (66a) umfaßt.

4. Fahrpedalmodul nach Anspruch 1 oder 2, **dadurch gekennzeichnet, daß** die Sensorhebelanlenkung (60) am Sensorhebel (58) einen im wesentlichen radial zur Sensorhebeldrehachse (54) verlaufenden, bei einer Betätigung des Pedalhebels (3) von der Pedalhebelanlenkung (66) mitgenommenen Anschlag umfaßt.

5. Fahrpedalmodul nach einem der Ansprüche 1 bis 4, **dadurch gekennzeichnet, daß** zwischen dem Pedalhebel (3) und dem Sensorhebel (58) eine den Sensor (5) in eine Sicherheitsstellung rückstellende Rückstellsicherung (10) vorgesehen ist.

6. Fahrpedalmodul nach Anspruch 5, **dadurch gekennzeichnet, daß** an dem Pedalhebel (3) ein im wesentlichen radial zur Schwenkachse (22) verlaufender, die Sensorhebelanlenkung (60) mitnehmender Gegenanschlag (76) vorgesehen ist.

7. Fahrpedalmodul nach Anspruch 5, **dadurch gekennzeichnet, daß** an dem Sensorhebel (58) ein im wesentlichen radial zur Sensorhebeldrehachse (54) verlaufender, von der Pedalhebelanlenkung (66) mitgenommener Gegenanschlag vorgesehen ist.

8. Fahrpedalmodul nach einem der vorhergehenden Ansprüche, **dadurch gekennzeichnet, daß** der Sensor (5) eine den Sensorhebel (58) rückstellende Sensorrückstellfeder (11) besitzt.

9. Fahrpedalmodul nach einem der vorhergehenden Ansprüche, **dadurch gekennzeichnet, daß** der Sensor (5) als vormontierbare Baueinheit konzipiert ist.

10. Fahrpedalmodul nach einem der vorhergehenden Ansprüche, **dadurch gekennzeichnet, daß** der Sensor (5) an der Haltestruktur (2) befestigt ist.

11. Fahrpedalmodul nach einem der vorhergehenden Ansprüche, **dadurch gekennzeichnet, daß** an der Lagerstelle (9) mindestens eine Lagerschale (34, 36) mit einem Lagerradius (40) und mindestens ein in der Lagerschale (34, 36) gelagerter, dem Lagerradius (40) angepaßter Lagerzapfen (30, 32) vorgesehen sind, wobei der Lagerradius (40) so groß bemessen ist, daß eine deutlich merkbare, eine Schwenkbewegung des Pedalhebels (3) behindernde Reibhysterese entsteht.

12. Fahrpedalmodul nach Anspruch 11, **dadurch gekennzeichnet, daß** die Rückstellfederung (8) so an dem Pedalhebel (3) angreift, daß durch die Rückstellfederung (8), neben einem Rückstellmoment (M3) zum Rückstellen des Pedalhebels (3) in die Ruhestellung (R), eine Reaktionskraft (F4) zwischen der Lagerschale (34) und dem Lagerzapfen (30, 32) entsteht.

13. Fahrpedalmodul nach einem der vorhergehenden Ansprüche, **dadurch gekennzeichnet, daß** die Rückstellfederung (8) mindestens eine einerseits auf den Pedalhebel (3) wirkende und andererseits auf die Haltestruktur (2) wirkende Rückstellfeder (24, 26) umfaßt.

14. Fahrpedalmodul nach Anspruch 13, **dadurch gekennzeichnet, daß** die Rückstellfederung (8) zwei oder drei Rückstellfedern (24, 26) umfaßt.

15. Fahrpedalmodul nach Anspruch 13 oder 14, **dadurch gekennzeichnet, daß** die mindestens eine Rückstellfeder (24, 26) eine Blattfeder (24, 26) ist.

16. Fahrpedalmodul nach Anspruch 15, **dadurch gekennzeichnet, daß** die Blattfeder (24, 26) in etwa U-förmig gebogen ist und zwei über einen Bogen (24m) verbundene Federschenkel (24a, 24b) besitzt, wobei einer der Federschenkel (24a) die Haltestruktur (2) und der jeweils andere Federschenkel (24b) den Pedalhebel (3) beaufschlagt.

17. Fahrpedalmodul nach Anspruch 16, **dadurch gekennzeichnet, daß** mindestens ein Teilbereich der Blattfeder (24) in den Pedalhebel (3) und/oder in die Haltestruktur (2) integriert ist.

18. Fahrpedalmodul nach einem der Ansprüche 14 bis 17, **dadurch gekennzeichnet, daß** bei einem Bruch der Rückstellfeder (24, 26) zumindest ein Teilstück der Rückstellfeder (24, 26) sichtbar aus ihrer Funktionsstellung herausfällt.

19. Fahrpedalmodul nach einem der vorhergehenden Ansprüche, **dadurch gekennzeichnet, daß** eine in einer festlegbaren Stellung des Pedalhebels (3) einen Kraftsprung auf den Pedalhebel (3) ausübende Kick-Down-Mechanik (7) vorgesehen ist.

20. Fahrpedalmodul nach Anspruch 19, **dadurch gekennzeichnet, daß** die Kick-Down-Mechanik (7) über einen Schnappmechanismus (82c) an der Haltestruktur (2) befestigt ist.

## Claims

1. Accelerator pedal module for controlling the power of a drive engine, having a pedal lever (3) which is mounted on a retaining structure (2) by means of a bearing point and which can be pivoted through a pivot angle about a pivot axis (22), a sensor (5) which senses the position of the pedal lever (3) and supplies a corresponding electrical signal to a controller, and a restoring suspension element (8) for restoring the pedal lever (3) into a position (R) at rest being provided, **characterized in that** the sensor (5) has a sensor housing (50) which can be secured to the retaining structure (2) and a sensor lever (58) which is mounted in the sensor housing (50) so as to pivot about a sensor lever axis (54) of rotation, the pivot position of said sensor lever (58) determining the electrical signal, a sensor lever articulation element (60) being provided on the sensor lever (58) at a radial distance from the axis (54) of rotation of the sensor lever and a pedal lever articulation element (66) which engages with the sensor lever articulation element (60) being provided on the pedal lever (3) at a radial distance from the said axis (22), the pedal lever articulation element (66) being connected to the pedal lever (3) in such a way that when the pedal lever (3) experiences a pivoting movement the pedal lever articulation element (66) pivots about the pivot axis (22) together with the pedal lever (3) and the sensor lever articulation element (60) is connected to the sensor lever (58) in such a way that when the sensor lever (58) experiences a pivoting movement the sensor lever articulation element (60) pivots about the axis (54) of rotation of the sensor lever together with the sensor lever (58).

2. Accelerator pedal module according to Claim 1, **characterized in that** the sensor housing (50) can be pivoted about the axis (54) of rotation of the sensor lever in order to adjust the electrical signal.

3. Accelerator pedal module according to Claim 1 or 2, **characterized in that** the pedal lever articulation element (66) on the pedal lever (3) comprises a stop (66a) which runs essentially radially to the pivot axis (22) and drives the sensor lever articulation element (60) when the pedal lever (3) is actuated.

4. Accelerator pedal module according to Claim 1 1 or 2, **characterized in that** the sensor lever articulation element (60) on the sensor lever (58) comprises a stop which runs essentially radially to the axis (54) of rotation of the sensor lever and is driven by the pedal lever articulation element (66) when the pedal lever (3) is actuated.

5. Accelerator pedal module according to one of Claims 1 to 4, **characterized in that** a restoring securing element (10) which restores the sensor (5) into a safety position is provided between the pedal lever (3) and the sensor lever (58).

6. Accelerator pedal module according to Claim 5, **characterized in that** a counterstop (76) which runs essentially radially to the pivot axis (22) and drives the sensor lever articulation element (60) is provided on the pedal lever (3).

7. Accelerator pedal module according to Claim 5, **characterized in that** the counterstop which runs essentially radially to the axis (54) of rotation of the sensor lever and is driven by the pedal lever articulation element (66) is provided on the sensor lever (58).

8. Accelerator pedal module according to one of the preceding claims, **characterized in that** the sensor (5) has a sensor restoring spring (11) which restores the sensor lever (58).

9. Accelerator pedal module according to one of the preceding claims, **characterized in that** the sensor (5) is conceived as a premountable physical unit.

10. Accelerator pedal module according to one of the preceding claims, **characterized in that** the sensor (5) is attached to the retaining structure (2).

11. Accelerator pedal module according to one of the preceding claims, **characterized in that** at least one bearing shell (34, 36) with a bearing radius (40) and at least one bearing pin (30, 32) which is mounted in the bearing shell (34, 36) and is matched to the bearing radius (40) are provided at the bearing point (9), the bearing radius (40) being dimensioned with such a magnitude that a clearly perceptible friction hysteresis which impedes a pivoting movement of the pedal lever (3) is produced.

12. Accelerator pedal module according to Claim 11, **characterized in that** the restoring suspension element (8) engages on the pedal lever (3) in such a way that the restoring suspension element (8) produces, in addition to a restoring moment (M3) for restoring the pedal lever (3) to the position (R) at rest, a reaction force (F4) between the bearing shell (34) and the bearing pin (30, 32).

13. Accelerator pedal module according to one of the preceding claims, **characterized in that** the restoring suspension element (8) comprises at least one restoring spring (24, 26) which acts on the pedal lever (3) on the one hand and on the retaining structure (2) on the other.

14. Accelerator pedal module according to Claim 13, **characterized in that** the restoring suspension element (8) comprises two or three restoring springs (24, 26).

15. Accelerator pedal module according to Claim 13 or 14, **characterized in that** the at least one restoring spring (24, 26) is a leaf spring (24, 26).

16. Accelerator pedal module according to Claim 15, **characterized in that** the leaf spring (24, 26) is bent in an approximately U shape and has two spring limbs (24a, 24b) which are connected by means of an arc (24m), one of the spring limbs (24a) acting on the retaining structure (2) and the respective other spring limb (24b) acting on the pedal lever (3).

17. Accelerator pedal module according to Claim 16, **characterized in that** at least part of the leaf spring (24) is integrated into the pedal lever (3) and/or into the retaining structure (2).

18. Accelerator pedal module according to one of Claims 14 to 17, **characterized in that** in the event of a fracture in the restoring spring (24, 26) at least part of the restoring spring (24, 26) drops visibly out of its functional position.

19. Accelerator pedal module according to one of the preceding claims, **characterized in that** a kick-down mechanism (7) which exerts a springing force on the pedal lever (3) in the securable position of the pedal lever (3) is provided.

20. Accelerator pedal module according to Claim 19, **characterized in that** the kick-down mechanism (7) is attached to the retaining structure (2) by means of a snap-fit mechanism (82c).

## Revendications

1. Module de pédale d'accélérateur pour commander la puissance fournie par un moteur, comprenant un levier de pédale 3, basculant d'un angle de basculement autour d'un axe de basculement (22) et monté par l'intermédiaire d'un palier sur une structure de fixation (2),
un capteur (5) détectant la position du levier de pédale (3) et fournissant à une commande un signal électrique correspondant, et
une suspension de ressort de rappel (8) pour rappeler le levier de pédale (3) en position de repos (R),
**caractérisé en ce que**
le capteur (5) possède un boîtier (50) qui se fixe par rapport à la structure de fixation (2), et un levier de capteur (58) monté pivotant dans le boîtier (50) autour d'un axe de rotation de levier de capteur (54), et dont la position de basculement définit le signal électrique, le levier de capteur (58) comportant une articulation de levier de capteur (60) à une distance radiale par rapport à l'axe de rotation du levier de capteur (54), et le levier de pédale (3) ayant une articulation de levier de pédale (66) en prise avec l'articulation de levier de capteur (60) à une certaine distance radiale de l'axe de basculement (22),
l'articulation du levier de pédale (66) étant reliée à un levier de pédale (3) pour que sous l'effet d'un mouvement de basculement du levier de pédale (3), l'articulation du levier de pédale (66) bascule en arrière avec le levier de pédale (3) autour de l'axe de basculement (22), et l'articulation du levier de capteur (60) étant reliée au levier de capteur (58) pour qu'en cas de mouvement de basculement du levier de capteur (58), l'articulation du levier de capteur (60) avec le levier de capteur (58) bascule autour de l'axe de rotation du levier de capteur (54).

2. Module de pédale d'accélérateur selon la revendication 1,
**caractérisé en ce que**
le boîtier de capteur (50) bascule autour de l'axe de rotation du levier de capteur (54) pour ajuster le signal électrique.

3. Module de pédale d'accélérateur selon l'une quelconque des revendications 1 ou 2,
**caractérisé en ce que**
l'articulation du levier de pédale (66) sur le levier de pédale (3) comporte une butée (66a) essentiellement radiale par rapport à l'axe de basculement (2) et qui lors de l'actionnement du levier de pédale (3), entraîne l'articulation du levier de capteur (60).

4. Module de pédale d'accélérateur selon l'une quelconque des revendications 1 ou 2,
**caractérisé en ce que**
l'articulation du levier de capteur (60) sur le levier de capteur (58) comporte une butée essentiellement radiale par rapport à l'axe de rotation du levier de capteur (54) et qui est entraînée par l'articulation du levier de pédale (66) lorsque le levier de pédale d'accélérateur (3) est actionné.

5. Module de pédale d'accélérateur selon l'une quelconque des revendications 1 à 4,
**caractérisé en ce qu'**
une protection de rappel (10) qui rappelle le capteur (5) en position de sécurité est prévue entre le levier de pédale (3) et le levier de capteur (58).

6. Module de pédale d'accélérateur selon la revendication 5,
**caractérisé en ce que**
le levier de pédale (3) comporte une butée antagoniste (76), essentiellement radiale par rapport à l'axe de basculement (22) et qui entraine l'articulation de levier de capteur (60).

7. Module de pédale d'accélérateur selon la revendication 5,
**caractérisé en ce que**
le levier de capteur (58) comporte une butée antagoniste essentiellement radiale à l'axe de rotation (54) du levier de capteur, et entraînée par l'articulation du levier de pédale (6).

8. Module de pédale d'accélérateur selon l'une quelconque des revendications précédentes,
**caractérisé en ce que**
le capteur (5) possède un ressort de rappel de capteur (11) qui rappelle le levier de capteur (58).

9. Module de pédale d'accélérateur selon l'une quelconque des revendications précédentes,
**caractérisé en ce que**
le capteur (5) est conçu comme ensemble pré-assemblé.

10. Module de pédale d'accélérateur selon l'une quelconque des revendications précédentes,
**caractérisé en ce que**
le capteur (5) est fixé à la structure de fixation (2).

11. Module de pédale d'accélérateur selon l'une quelconque des revendications précédentes,
**caractérisé en ce que**
le palier (9) comporte au moins un coussinet (34, 36) avec un rayon de palier (40) et au moins un tourillon de palier (30, 32) monté dans le coussinet (34, 36) et adapté au rayon de palier (40),
le rayon de palier (40) étant dimensionné pour former une hystérésis de frottement significativement plus élevée et gênant le mouvement de basculement en retour du levier de pédale d'accélérateur (3).

12. Module de pédale d'accélérateur selon la revendication 11,
**caractérisé en ce que**
la suspension de rappel (8) agit sur le levier de pédale (3) pour que la suspension de rappel (8) engendre à côté d'un couple de rappel (M3) pour rappeler le levier de pédale (3) en position de repos (R), une force de réaction (F4) entre le coussinet (34) et le tourillon de palier (30, 32).

13. Module de pédale d'accélérateur selon l'une quelconque des revendications précédentes,
**caractérisé en ce que**
la suspension de rappel (8) comprend au moins un ressort de rappel (24, 26), agissant d'un côté sur le levier de pédale (3) et de l'autre côté sur la structure de fixation (2).

14. Module de pédale d'accélérateur selon la revendication 13,
**caractérisé en ce que**
la suspension de rappel (8) comprend deux ou trois ressorts de rappel (24, 26).

15. Module de pédale d'accélérateur selon l'une quelconque des revendications 13 ou 14,
**caractérisé en ce qu'**
au moins un ressort de rappel (24, 26) est un ressort-lame (24, 26).

16. Module de pédale d'accélérateur selon la revendication 15,
**caractérisé en ce que**
le ressort-lame (24, 26) est recourbé sensiblement en forme de U et possède deux branches (24a, 24b) reliées par un arc (24m), l'une des branches de ressort (24a) sollicitant la structure de fixation (2) et chaque autre branche de ressort (24b) sollicitant le levier de pédale (3).

17. Module de pédale d'accélérateur selon la revendication 16,
**caractérisé en ce qu'**
au moins une zone partielle du ressort-lame (24) est intégrée dans le levier de pédale (3) et/ou dans la structure de fixation (2).

18. Module de pédale d'accélérateur selon l'une quelconque des revendications 14 à 17,
**caractérisé en ce qu'**
en cas de rupture du ressort de rappel (24, 26), au moins une partie du ressort de rappel (24, 26) tombe de sa position de fonctionnement, de façon visible.

19. Module de pédale d'accélérateur selon l'une quelconque des revendications précédentes,
**caractérisé par**
un mécanisme de rétrogradation forcée (7) exerçant dans une position réglable du levier de pédale (3), un saut de force sur le levier de pédale (3).

20. Module de pédale d'accélérateur selon la revendication 19,
**caractérisé en ce que**
le mécanisme de rétrogradation forcée (7) est fixé à la structure de fixation (2) par un mécanisme d'encliquetage (82c).
